# EUROPEAN PATENT APPLICATION

(11) **EP 4 642 040 A1**
(43) Date of publication of application: **29.10.2025**
(21) Application number: 23925046.7
(22) Date of filing: 04.12.2023
(51) Int. Cl.: H04N 23/57

(54) **PHOTOGRAPHING METHOD**

(30) Priority: 27.02.2023 CN 202310212396
(71) Applicant: Honor Device Co., Ltd., Shenzhen, Guangdong 518040 (CN)
(72) Inventor: DU, Yuanchao, Shenzhen, Guangdong 518040 (CN); XUAN, Xinsheng, Shenzhen, Guangdong 518040 (CN); ZHANG, Nong, Shenzhen, Guangdong 518040 (CN); ZHU, Shiyu, Shenzhen, Guangdong 518040 (CN); HOU, Weilong, Shenzhen, Guangdong 518040 (CN); ZHANG, Zuochao, Shenzhen, Guangdong 518040 (CN)
(74) Representative: Goddar, Heinz J.
(86) International application number: PCT/CN2023/136155
(87) International publication number: WO 2024/179100

(57) **Abstract**

This application provides a shooting method. The method may be applied to an electronic device such as a smartphone or a tablet computer. According to the shooting method provided in embodiments of this application, after a camera is started, an electronic device 100 may perform screening to obtain a highlight image frame based on a preset algorithm and image frames reported by the camera, then automatically perform a photo shooting operation, and output the highlight image frame as a highlight photo and save the highlight photo. In this way, at any moment during a preview, after a highlight image frame is detected, the electronic device 100 can automatically shoot and save the highlight image frame, without a need for a user operation. This avoids a problem that a user cannot shoot a highlight photo due to problems such as a human reaction delay and a transmission delay of the electronic device.

## Description

This application claims priority to Chinese Patent Application No. 202310212396.5, filed with the China National Intellectual Property Administration on February 27, 2023 and entitled "SHOOTING METHOD", which is incorporated herein by reference in its entirety.

### TECHNICAL FIELD

This application relates to the field of terminals, and in particular, to a shooting method.

### BACKGROUND

In a shooting process, due to problems such as a human reaction delay and a transmission delay of an electronic device, a user often finds it difficult to shoot a highlight photo of a truly magic moment. This greatly degrades shooting experience of the user.

### SUMMARY

This application provides a shooting method. According to the shooting method, in a preview process, an electronic device 100 automatically identifies images reported by a camera, performs screening to obtain a highlight image from the images, and saves the highlight image, without a need for a user operation.

According to a first aspect, this application provides a shooting method. The method is applied to an electronic device, the electronic device includes a camera, and the method includes: starting a camera application; displaying a preview interface at a moment T1, where the preview interface includes a preview area, a shutter button, and a third control, and the preview area displays an image frame captured by the camera in real time; keeping displaying the preview interface, and displaying a thumbnail of a first image in the third control at a moment T2, where the first image is an image that is automatically shot by the electronic device between the moment T1 and the moment T2, in which an object is in a first posture, and whose image quality satisfies a first preset condition, the image quality includes definition and exposure of the image, the first posture is a posture in a first action, the first action is determined based on a plurality of image frames captured by the electronic device in real time, the first action is a preset action, and the moment T1 precedes the moment T2; detecting a first operation performed on the third control; and displaying the first image in response to the first operation.

According to the method provided in the first aspect, the electronic device may receive, in real time, images reported by the camera, perform screening to obtain, from the images reported by the camera, an image that includes a specific action and that has suitable image definition and exposure, and automatically perform a shooting operation and save the image, without a need for a shooting operation of a user. The electronic device may display a thumbnail of a snapped photo, to inform a user that the electronic device performs automatic shooting and saves a photo obtained through the automatic shooting. Then, the user may tap the thumbnail to view an image automatically shot by the electronic device.

With reference to the method provided in the first aspect, in some embodiments, the first image further satisfies one or more of the following: a first object is included, a size and a position of the first object satisfy a first preset requirement, a human face is included, a size and a position of the human face satisfy a second preset requirement, an eye on the human face is open, or a smile is on the human face.

The electronic device may further determine, based on the foregoing one or more conditions, an image with more wonderful image content from images that include the first action and whose image quality satisfies a requirement.

With reference to the method provided in the first aspect, in some embodiments, the method further includes: displaying a first identifier in the preview interface at the moment T2, where the first identifier is used to indicate that the electronic device has automatically shot the first image.

According to the method provided in the foregoing embodiments, after the automatic shooting is performed, when the thumbnail of the snapped photo is displayed, the electronic device may display a specific identifier. In this way, after seeing the identifier, the user can determine that one photo has been shot, and can determine that the shot photo is automatically shot by the electronic device.

In some embodiments, the electronic device may display the specific identifier in a lower left corner of a playback area. In some other embodiments, the specific identifier may alternatively be displayed on the thumbnail of the snapped photo.

With reference to the method provided in the first aspect, in some embodiments, the method further includes: displaying a third interface, where the third interface displays one or more images stored in the electronic device, the one or more images include a thumbnail of the first image, the thumbnail displays a first identifier, and the first identifier is used to indicate that the first image is automatically shot by the electronic device.

According to the method provided in the foregoing embodiments, when providing the user with a function of viewing shot photos (for example, a gallery), the electronic device may display a thumbnail of an automatically-shot photo in an interface for displaying shot photos, and display a specific identifier indicating automatic shooting on the thumbnail of the automatically-shot photo. In this way, when viewing images by using the gallery application, the user can quickly determine and view the photo automatically shot by the electronic device.

With reference to the method provided in the first aspect, in some embodiments, the preview interface further includes a first control, and the method further includes: detecting a user operation performed on the first control, and displaying a fourth interface, where the fourth interface includes a second control; and detecting a user operation performed on the second control, and enabling an automatic shooting function.

According to the method provided in the foregoing embodiments, the electronic device may set a feature switch, such as the second control, to control enabling of automatic shooting. When the user has an automatic shooting requirement, the electronic device may enable the automatic shooting based on an operation performed on the feature switch, and perform a subsequent operation of identifying a highlight image, and shooting and saving the highlight image. In this way, the electronic device can reduce power consumption, and avoid generating a large quantity of automatically-shot photos and affecting user experience.

With reference to the method provided in the first aspect, in some embodiments, an image captured by the camera after the first image further includes a second image, the second image also includes the first action and image quality of the second image also satisfies the first preset condition, a highlight degree of the second image is lower than a highlight degree of the first image, and an image shot by the electronic device does not include the second image; and a highlight degree of an image is determined based on a completion degree of the first action in the image and image quality of the image.

According to the method provided in the foregoing embodiments, the electronic device may further determine a better image in highlight images based on a highlight degree, and automatically shoot only the better highlight image. In this way, the electronic device can limit a quantity of automatically-shot images, so that finally snapped images are all high-quality images, to reduce a waste of storage resources and improve use experience of the user.

With reference to the method provided in the first aspect, in some embodiments, a time interval between the second image and the first image is less than a first time interval.

According to the method provided in the foregoing embodiments, the electronic device may limit, based on the first time interval, a comparison between candidate highlight images, that is, limit automatic shooting, and avoid a case in which only one frame of image is finally snapped due to excessive limitation.

With reference to the method provided in the first aspect, in some embodiments, an image captured by the camera after the first image further includes a third image, the third image also includes the first action and image quality of the second image also satisfies the first preset condition, and the method further includes: automatically shooting the third image; and a similarity between the first image and the third image is less than a first preset value, or a time interval between the first image and the third image is greater than a second time interval.

According to the method provided in the foregoing embodiments, after triggering snapping of a specific image, the electronic device may determine, based on a similarity between the specific image and a snapped image, whether the specific image is redundant, so as to avoid snapping a redundant image. Alternatively, the electronic device may set a minimum time interval between two times of snapping, for example, the second time interval. When a time interval between two times of snapping is greater than the second time interval, the electronic device may determine that redundancy exists between a current image that triggers snapping and a snapped image. In this case, the electronic device may terminate the snapping to avoid redundancy.

With reference to the method provided in the first aspect, in some embodiments, before the electronic device automatically shoots the first image that includes the first action and whose image quality satisfies the first preset condition, the method further includes: determining that a quantity of images that have been automatically shot by the electronic device is less than a third preset value.

According to the method provided in the foregoing embodiments, the electronic device may set a maximum quantity of snapped images based on an automatic shooting upper limit. When a quantity of snapped images reaches the automatic shooting upper limit, the electronic device may stop performing automatic shooting, to avoid generating excessive automatically-shot images, occupying a storage space of the device, and affecting user experience.

With reference to the method provided in the first aspect, in some embodiments, the determining that a quantity of images that have been automatically shot by the electronic device is less than a third preset value specifically includes: determining that a quantity of images that belong to a same scene as the first image in the images that have been automatically shot by the electronic device is less than a fourth preset value.

According to the method provided in the foregoing embodiments, the electronic device may identify different shooting scenes based on image content, and set an automatic shooting upper limit for each shooting scene. When a quantity of snapped images corresponding to a shooting scene reaches an automatic shooting upper limit of the scene, the electronic device may stop snapping an image of the scene, to avoid redundancy. When the scene changes, the electronic device may start snapping again.

With reference to the method provided in the first aspect, in some embodiments, that the first image is an image that is automatically shot by the electronic device between the moment T1 and the moment T2 and includes a first action and whose image quality satisfies a first preset condition specifically includes: the first image is obtained by the electronic device by automatically shooting a plurality of frames of images including a fourth image, where the fourth image is an image between the moment T1 and the moment T2 that includes the first action and whose image quality satisfies the first preset condition.

According to the method provided in the foregoing embodiments, the electronic device may process a highlight image based on another image near the highlight image (multi-frame fusion), to further improve quality of the highlight image, for example, color, brightness, and saturation.

With reference to the method provided in the first aspect, in some embodiments, that the first image is obtained by the electronic device by automatically shooting a plurality of frames of images including a fourth image specifically includes: in a first shooting mode, the first image is obtained by the electronic device by automatically shooting the plurality of frames of images including the fourth image.

According to the method provided in the foregoing embodiments, the electronic device may determine, based on a shooting mode, whether multi-frame fusion needs to be performed. In some specific shooting modes, the electronic device may significantly improve quality of a finally output photo through the multi-frame fusion. In another scenario, quality improvement brought by multi-frame fusion is not obvious. In this case, the electronic device may not perform multi-frame fusion, to save resources and reduce power consumption.

With reference to the method provided in the first aspect, in some embodiments, the first shooting mode includes a night mode.

According to the method provided in the foregoing embodiments, when shooting is performed in the night mode, the electronic device may perform multi-frame fusion, to significantly improve quality of a finally output photo.

According to a second aspect, this application provides an electronic device. The electronic device includes one or more processors and one or more memories, the one or more memories are coupled to the one or more processors, the one or more memories are configured to store computer program code, the computer program code includes a computer instruction, and when the one or more processors execute the computer instruction, the electronic device is enabled to perform the method described in the first aspect or any possible implementation of the first aspect.

According to a third aspect, an embodiment of this application provides a chip system. The chip system is applied to an electronic device, the chip system includes one or more processors, and the processor is configured to invoke a computer instruction to enable the electronic device to perform the method described in the first aspect or any possible implementation of the first aspect.

According to a fourth aspect, this application provides a computer-readable storage medium, including instructions. When the instructions are run on an electronic device, the electronic device is enabled to perform the method described in the first aspect or any possible implementation of the first aspect.

According to a fifth aspect, this application provides a computer program product including an instruction. When the computer program product is run on an electronic device, the electronic device is enabled to perform the method described in the first aspect or any possible implementation of the first aspect.

It can be understood that the electronic device provided in the second aspect, the chip system provided in the third aspect, the computer storage medium provided in the fourth aspect, and the computer program product provided in the fifth aspect are all used to perform the method provided in this application. Therefore, for beneficial effects that can be achieved, refer to the beneficial effects in the corresponding method. Details are not described herein again.

### BRIEF DESCRIPTION OF DRAWINGS

FIG. 1A to FIG. 1F are a group of user interfaces for enabling an automatic snapping function according to an embodiment of this application;
FIG. 2A to FIG. 2H are a group of user interfaces for implementing automatic snapping according to an embodiment of this application;
FIG. 3A to FIG. 3J are a group of user interfaces for implementing automatic snapping in a video recording process according to an embodiment of this application;
FIG. 4A to FIG. 4E are a group of user interfaces for implementing manual snapping according to an embodiment of this application;
FIG. 5A to FIG. 5E are other user interfaces for enabling an automatic snapping function according to an embodiment of this application;
FIG. 6A is a schematic diagram of a method for implementing automatic snapping according to an embodiment of this application;
FIG. 6B is a schematic diagram of a method for determining a highlight degree of an image according to an embodiment of this application;
FIG. 7A to FIG. 7C are a flowchart of implementing automatic snapping according to an embodiment of this application;
FIG. 8 is a schematic diagram of a system structure of an electronic device 100 according to an embodiment of this application; and
FIG. 9 is a schematic diagram of a structure of an electronic device 100 according to an embodiment of this application.

### DESCRIPTION OF EMBODIMENTS

Terms used in the following embodiments of this application are merely intended to describe particular embodiments, and are not intended to limit this application.

In a shooting process, due to problems such as a human reaction delay and a transmission delay of an electronic device, a user often finds it difficult to shoot a highlight photo of a truly magic moment.

A magic moment is a moment at which a shot object is in a best state and/or action in a period of time. The state and the action are respectively for a still object shooting scene and a non-scenery shooting scene. In a still object shooting scene, a magic moment is a moment at which a shot object is in a good relatively-still state in physical space and imaging of a still object in camera imaging is clear, jitter-free, and noise-free. In a non-still object shooting scene, a magic moment is a moment at which a shot object acts best in physical space and imaging of a still object in camera imaging is clear, jitter-free, and noise-free.

For example, when a famous scenic spot is shot, a moment at which imaging of a building in a camera is complete, clear, jitter-free, and noise-free is a magic moment; when a hurdler is shot, a moment at which the hurdler jumps across a hurdle and imaging is clear, jitter-free, and noise-free is a magic moment; or when a close-up of a human is shot, a moment at which the human opens eyes and smiles and imaging is clear, jitter-free, and noise-free is a magic moment. A photo that is output after an image of a magic moment is processed is a highlight photo.

In view of this, an embodiment of this application provides a shooting method. The method may be applied to an electronic device that has a camera and provides a shooting and display service, such as a smartphone or a tablet computer. The electronic device is denoted as an electronic device 100.

Not limited to the smartphone and the tablet computer, the electronic device 100 may alternatively be a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 100 is not particularly limited in embodiments of this application.

According to the shooting method provided in this embodiment of this application, after the camera is started, the electronic device 100 may determine, based on a preset algorithm and image frames reported by the camera, whether the image frames are highlight image frames, that is, determine whether moments corresponding to the image frames are magic moments. When an image frame reported by the camera is a highlight image frame, the electronic device 100 may perform a photo shooting operation, and output the highlight image frame as a highlight photo.

The foregoing shooting method of identifying a magic moment based on a preset algorithm and outputting a highlight image frame of the magic moment as a highlight photo may be referred to as automatic snapping (or automatic shooting). Automatic snapping can automatically identify a magic moment and shoot a highlight photo, and there is no need for a user to perform a shooting operation. This reduces user operations, and can also avoid missing a magic moment.

Further, to improve use experience of a user and avoid outputting excessive and redundant photos, the electronic device 100 may identify a detailed shooting scene, and set an upper limit of highlight photos of each scene. When a quantity of highlight photos of a scene reaches an upper limit of the scene, the electronic device 100 no longer performs automatic snapping on the scene. Alternatively, the electronic device 100 may set an automatic snapping upper limit. When a quantity of snapped photos reaches the upper limit, the electronic device 100 no longer performs automatic snapping on the scene.

First, in this embodiment of this application, the electronic device 100 may enable or disable automatic snapping according to a choice of a user.

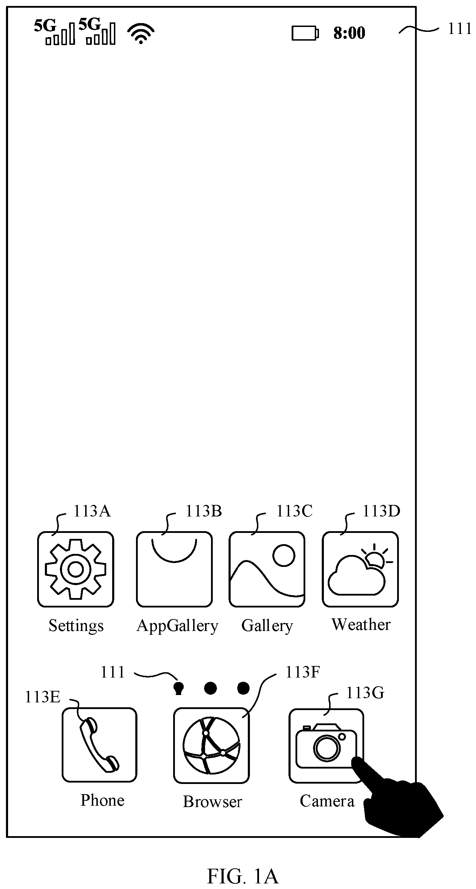

FIG. 1A to FIG. 1F are a group of user interfaces for enabling an automatic snapping function according to an embodiment of this application.

FIG. 1A is a homepage (homepage) of the electronic device 100 according to an embodiment of this application.

As shown in FIG. 1A, the homepage may include a status bar 111, a page indicator 112, and a plurality of application icons.

The status bar may include one or more signal strength indicators of a mobile communication signal (which may also be referred to as a cellular signal), a wireless fidelity (wireless fidelity, Wi-Fi) signal strength indicator, a battery status indicator, a time indicator, and the like.

The page indicator 112 may be configured to indicate a position relationship between a currently displayed page and another page.

The plurality of application icons may include a settings application icon 113A, an AppGallery application icon 113B, a gallery application icon 113C, a weather application icon 113D, a phone application icon 113E, a browser application icon 113F, a camera application icon 113G, and the like. In addition to the foregoing icons, the homepage may further include another application icon. Examples are not enumerated herein. The plurality of application icons may be distributed on a plurality of pages. The page indicator 112 may be configured to indicate a specific page that a user is currently browsing in the plurality of pages hosting a plurality of applications. The user may browse another page by performing a touch operation of sliding leftward or rightward.

It can be understood that the user interface in FIG. 1A and in subsequent descriptions is merely an example of a possible user interface style of the electronic device 100 that uses a mobile phone as an example, and shall not constitute a limitation on embodiments of this application.

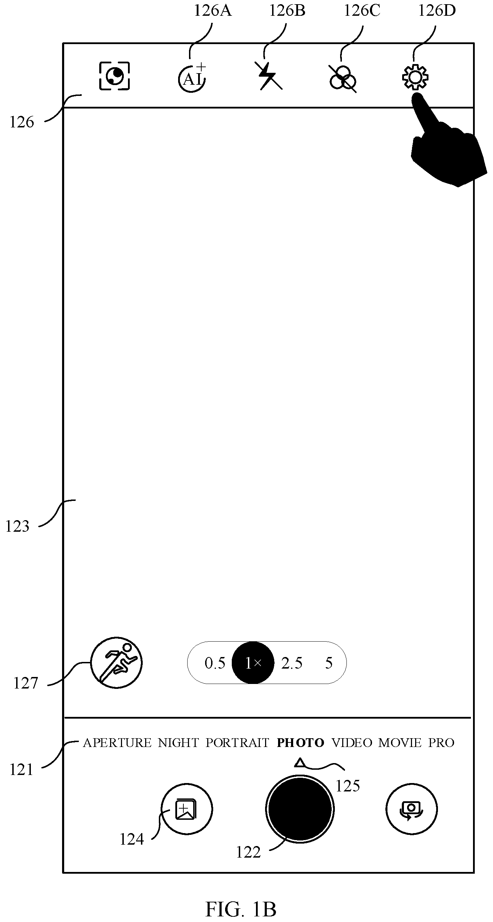

As shown in FIG. 1A, the electronic device 100 may detect a user operation performed by the user on the camera application icon 113G. In response to the foregoing operation, the electronic device 100 may start a camera application, and display a user interface of the camera application shown in FIG. 1B. FIG. 1B is a user interface of a shooting and display service provided by the camera application according to an embodiment of this application, and the user interface is also referred to as a preview interface.

As shown in FIG. 1B, the preview interface may include a mode bar 121, a shooting control 122, a preview window 123, and a playback control 124.

The mode bar 121 may include a plurality of shooting mode options, for example, "NIGHT", "PORTRAIT", "PHOTO", and "VIDEO". Different shooting modes may provide shooting services with different effects for the user. The user may select any one of a plurality of shooting modes according to different requirements to shoot. For example, "PHOTO" may be a default shooting mode, and is for shooting a photo. "VIDEO" is for recording a video. The "NIGHT" mode is applicable to a shooting scene with low light, such as night. The "PORTRAIT" mode is applicable to a shooting scene in which a subject to be shot is a human. The electronic device 100 may further provide more shooting modes, for example, "APERTURE", "MOVIE", and "PRO". Examples are not enumerated herein.

The electronic device 100 may detect a user operation performed on the mode bar 121, and change a currently used shooting mode based on the user operation. The user operation is, for example, a leftward/rightward sliding operation. For example, when it is detected that the mode bar 121 is dragged to slide leftward (a leftward sliding operation) and a floating icon 125 is made to stop at the "PORTRAIT" option, the electronic device 100 may switch to the "PORTRAIT" mode. By default, the electronic device 100 first uses the "PHOTO" mode.

The shooting control 122 is configured to trigger photo shooting. The shooting control 122 is also referred to as a shutter button. The electronic device 100 may detect whether there is a user operation, such as a tap operation, that is performed on the shooting control 122. After a user operation performed on the shooting control 122 is detected, the electronic device 100 may generate a photo shooting instruction. The electronic device 100 may obtain, based on the photo shooting instruction, an image reported by a camera at a corresponding timestamp, and then save the image as a photo.

The preview window 123 may be configured to display, in real time, an image report by the camera. A display area corresponding to the preview window 123 is also referred to as a preview area. In different shooting modes, the electronic device 100 may process an image reported by the camera, to improve a display effect of the image. For example, in the "PORTRAIT" mode, the electronic device 100 may blur a background in an image reported by the camera, to emphasize a portrait. Herein, the preview window 123 may display, in real time, images processed by image processing algorithms corresponding to different shooting modes, so that the user can perceive, in real time, shooting effects corresponding to the different shooting modes.

The playback control 124 may be used for viewing a thumbnail of a shot image (photo/video). A display area corresponding to the playback control 124 is also referred to as a playback area. The playback control 124 is also referred to as a third control. In this embodiment of this application, after identifying a highlight image frame based on a preset algorithm and performing an automatic snapping operation, the electronic device 100 may generate and save a highlight photo obtained through automatic snapping and a corresponding thumbnail. In this case, the playback control 124 may display the thumbnail of the highlight photo obtained through automatic snapping. After a user operation performed on the playback control 124 is detected, the electronic device 100 may display the highlight photo corresponding to the thumbnail.

The preview interface further includes a shortcut function area 126. As shown in FIG. 1B, the shortcut function area 126 may include a control 126A, a control 126B, a control 126C, and a control 126D. The control 126A may be configured to disable a smart shooting (AI photography) function. Smart shooting is automatically identifying an object to be shot and performing different processing on different objects to output a photo or a video with a better effect. The control 126B may be configured to enable a flash. The control 126C may be configured to select a filter. The control 126D may be configured to obtain more functions.

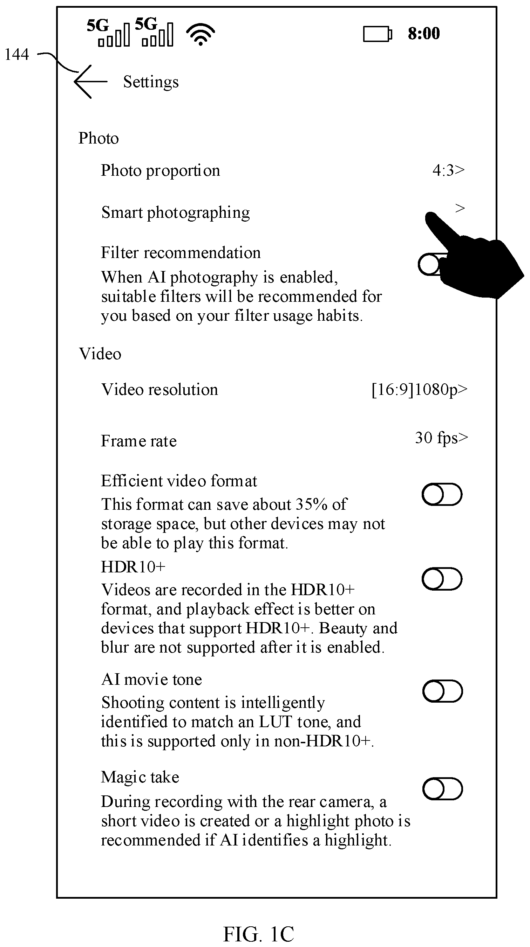

As shown in FIG. 1B, the electronic device 100 may detect a user operation performed by the user on the control 126D. In response to the foregoing operation, the electronic device 100 may display a user interface shown in FIG. 1C. The control 126D may be referred to as a first control.

The interface may display a plurality of function option controls, for example, "Photo proportion", "Smart photographing", "Video resolution", and "Frame rate". Examples are not enumerated herein. The "Photo proportion" control may be configured to set an aspect ratio of a shot photo, for example, 4:3 or 9:16. The "Smart photographing" control may be configured to set a special photo shooting manner, for example, voice control photographing in which photo shooting is controlled by using a voice, gesture control photographing in which photo shooting is controlled by using a gesture, and automatic snapping provided in this embodiment of this application. The "Video resolution" control may be configured to set a resolution of a video, for example, [16:9]1080p. The "Frame rate" control may be configured to set a frame rate of a video, for example, 30 fps.

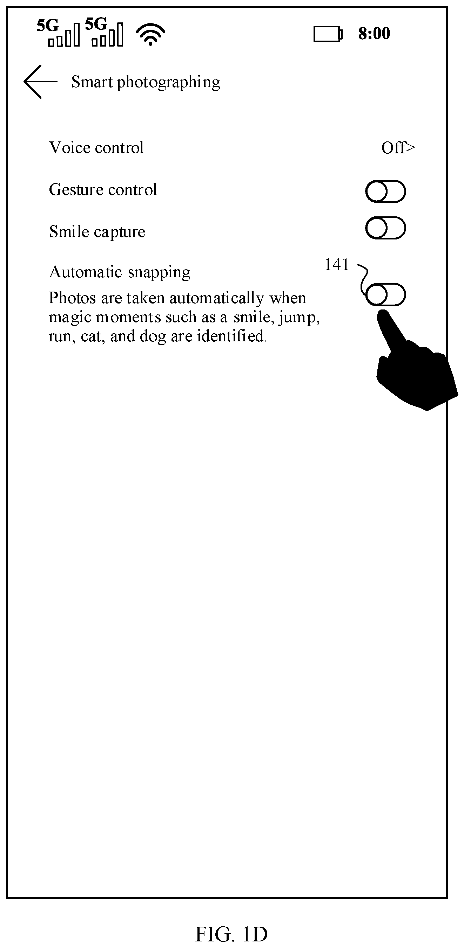

As shown in FIG. 1C, the electronic device 100 may detect a user operation performed by the user on the "Smart photographing" control. In response to the foregoing operation, the electronic device 100 may display a user interface shown in FIG. 1D. The user interface shown in FIG. 1D may be referred to as a fourth interface.

The interface may display a plurality of function option controls in the "Smart photographing" directory, for example, "Voice control", "Gesture control", "Smile capture", and "Automatic snapping". The "Voice control" control may be configured to enable or disable voice control photographing, and "Gesture control" may be configured to enable or disable gesture control photographing. "Smile capture" may be configured to enable or disable smile capture. "Automatic snapping" may be configured to enable or disable automatic snapping provided in this embodiment of this application. Voice control photographing, gesture control photographing, smile capture, and a conventional shooting operation through a tap on the shooting control 122 are non-automatic snapping. It can be understood that, the voice control photographing, the gesture control photographing, the smile capture, and the conventional shooting operation through the tap on the shooting control 122 all mean that the electronic device shoots a photo in response to conscious behavior of the user (for example, the electronic device shoots a photo when learning that the user smiles), while this application focuses on a case in which the electronic device automatically shoots a photo when the user is unconscious, or the user knows that one or several photos will be snapped during an action, a preview, or a video but does not know which one or several photos will be snapped.

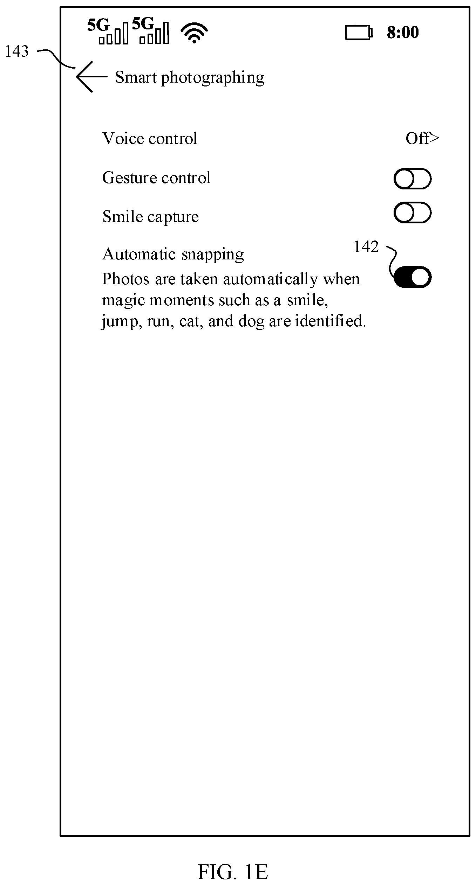

As shown in FIG. 1D, the electronic device 100 may detect a user operation performed by the user on a button 141. The button 141 may be referred to as a second control. In response to the foregoing operation, the electronic device 100 may enable automatic snapping. The electronic device 100 may display a user interface shown in FIG. 1E. As shown in FIG. 1E, the original button 141 in FIG. 1D may be replaced with a button 142.

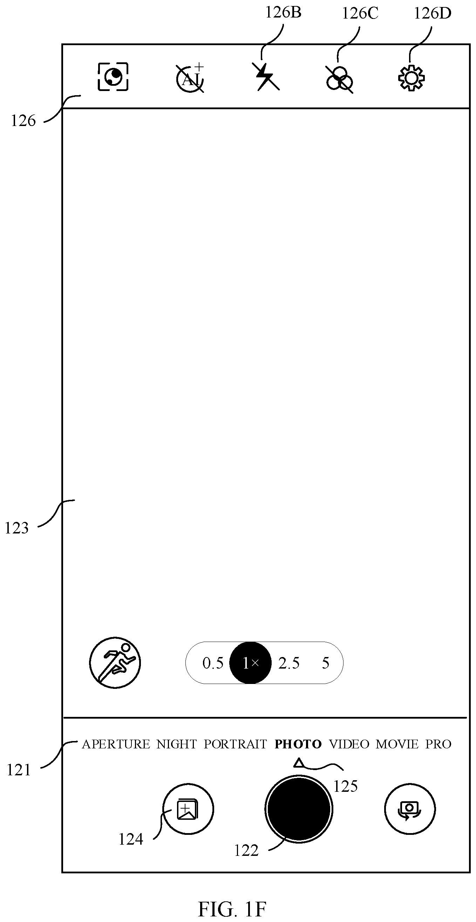

Then, the electronic device 100 may sequentially detect user operations performed on a control 143 and a control 144. In response to the foregoing operations, the electronic device 100 may redisplay a preview interface, with reference to FIG. 1F.

In some embodiments, the automatic snapping conflicts with another shooting function. In this case, only one of the conflicting functions can be enabled. For example, the automatic snapping may conflict with the AI photography. In this case, the electronic device 100 does not support simultaneous enabling of the automatic snapping and the AI photography. In a scenario in which the automatic snapping is enabled, if a user operation of enabling the AI photography is detected, the electronic device 100 may enable the AI photography and disable the automatic snapping. Conversely, in a scenario in which the AI photography is enabled, if a user operation of enabling the automatic snapping is detected, the electronic device 100 may enable the automatic snapping and disable the AI photography.

As shown in FIG. 1F, after the automatic snapping is enabled through operations shown in FIG. 1C to FIG. 1E, the electronic device 100 may display a control 151 to replace the original control 126A, to indicate that the AI photography function is disabled.

Another shooting function that does not conflict with manual snapping may be enabled or disabled independently. For example, the user may enable the flash by using the control 126B and select a filter by using the control 126C at any time.

Refer to FIG. 1C to FIG. 1E. The user may obtain, through a same path, the control 142 that disables the automatic snapping, and then disable the automatic snapping by using the control 142. Details are not described herein again.

In the foregoing method, the user can enable/disable the automatic snapping function at any time according to a requirement of the user. In this way, the electronic device 100 can provide the foregoing service when the user requires the automatic snapping for obtaining a highlight photo of a magic moment; or the electronic device 100 can disable the automatic snapping when the user does not require the automatic snapping. This reduces computing costs and power consumption, and improves use experience of the user.

After the automatic snapping is enabled, in a preview process, the electronic device 100 may identify, in real time, an image reported by the camera, and determine whether the image is a highlight image frame. After a highlight image frame is identified, the electronic device 100 may automatically perform a photo shooting operation on the highlight image frame, and output a highlight photo.

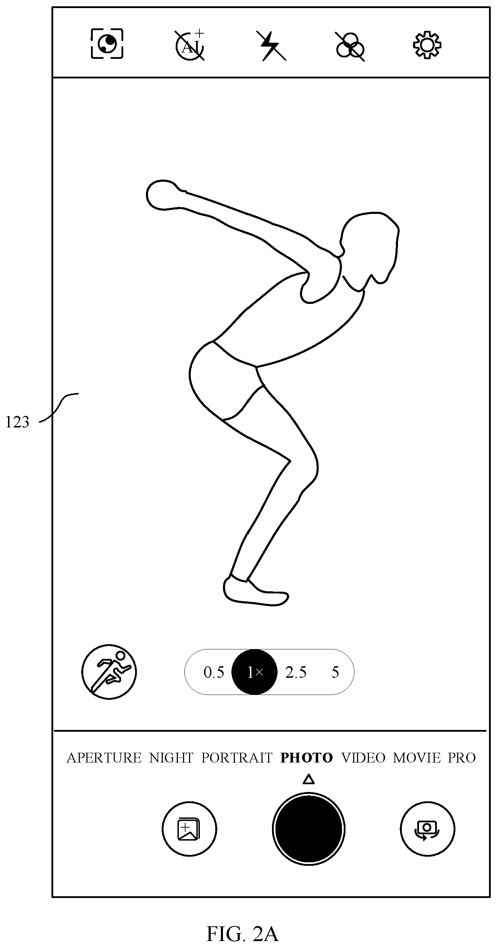

FIG. 2A to FIG. 2H are a group of user interfaces for implementing automatic snapping according to an embodiment of this application.

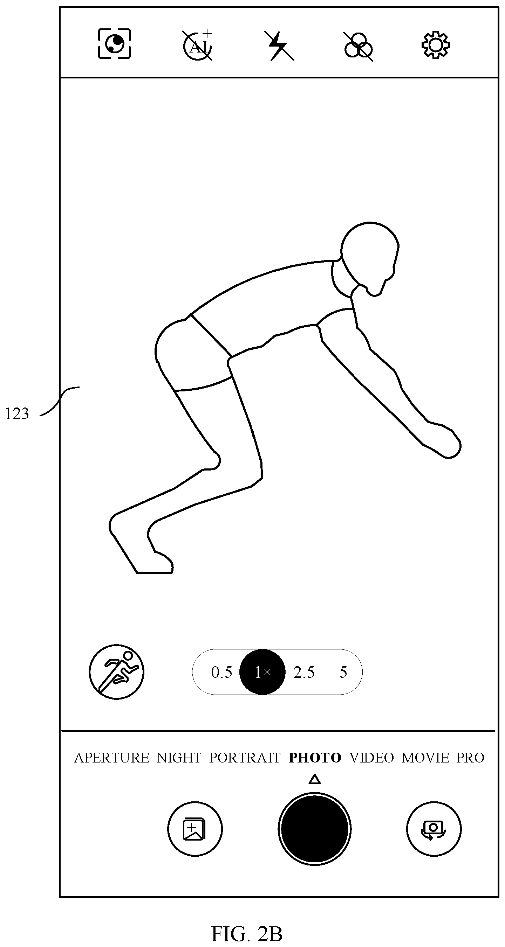

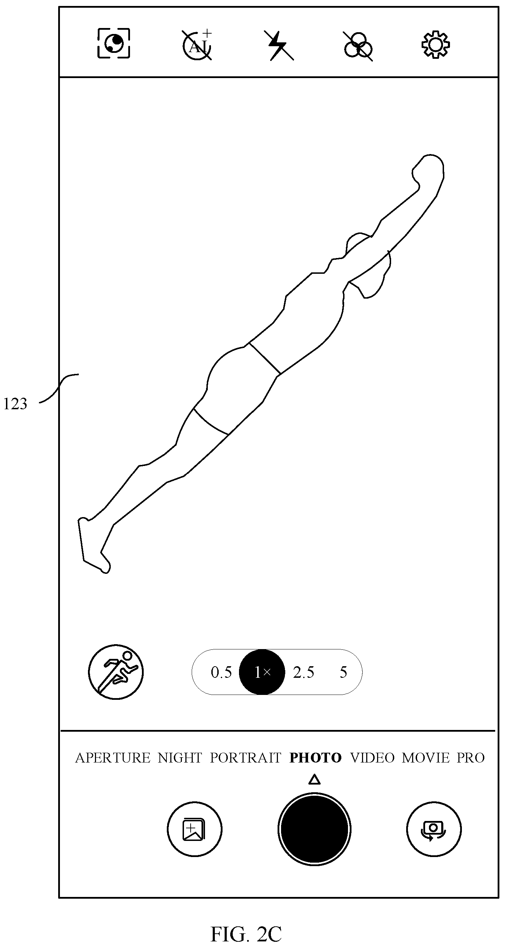

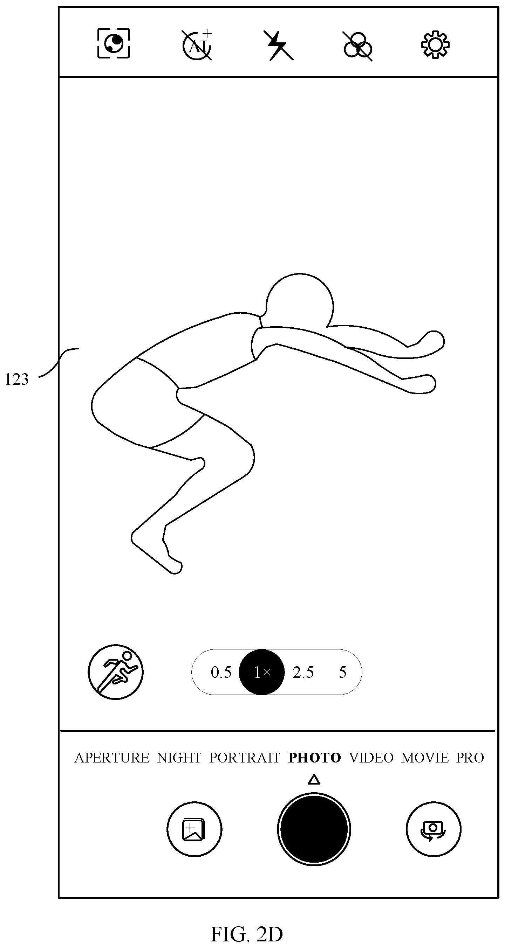

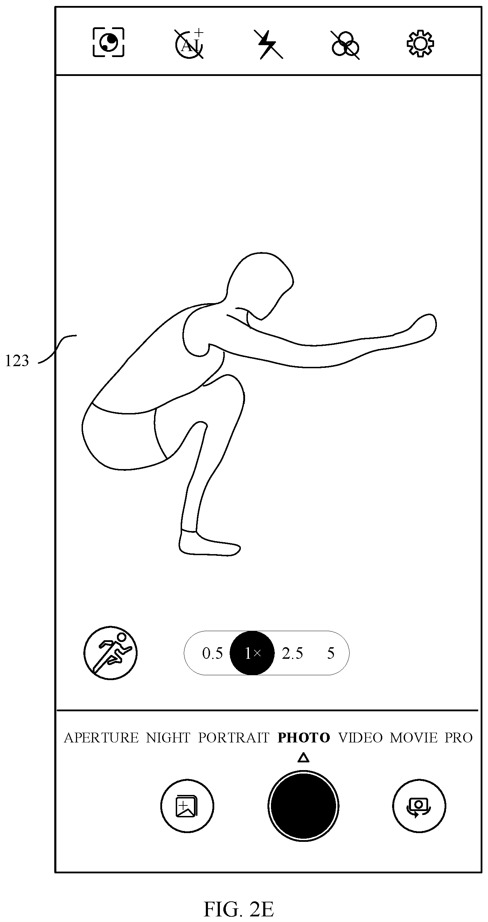

The electronic device 100 may shoot an athlete who is on a long jump. Refer to FIG. 2A, FIG. 2B, FIG. 2C, FIG. 2D, and FIG. 2E. In a preview interface after the automatic snapping is enabled, the preview window 123 may sequentially display motion states of the athlete shot by the camera at different moments in a long jump process. In addition, with the use of a preset algorithm corresponding to the automatic snapping, the electronic device 100 may identify the foregoing series of images, and determine whether each frame of image is wonderful.

Specifically, the electronic device 100 may obtain, based on a preset image content extraction algorithm, a shot object and a motion state of the object that are included in each frame of image. When the shot object is a human, the electronic device 100 may further obtain a human face and an attribute of the human face (for example, whether there is a smile on the human face or an eye is closed) in the image by using the image content extraction algorithm. A definition algorithm is further preset for the electronic device 100. The electronic device 100 may obtain definition of each frame of image based on the definition algorithm. In a specific implementation, when an image includes a human and the human is in a best completion state of a preset action, and the image is clear, the electronic device 100 may determine that the image is a highlight image frame. In a specific implementation, when an image includes a human and the human opens eyes and smiles, and the image is clear, the electronic device 100 may determine that the image is a highlight image frame. A subsequent embodiment specifically describes a method in which the electronic device 100 determines a highlight image frame based on a preset algorithm, and the method is not described in detail here.

For example, during the long jump, a state in which the human is in a flat-plate shape after takeoff may be referred to as a best completion state of the long jump, that is, a state shown in the preview window 123 in FIG. 2C. After identifying the long jump action based on images in a period of time shown in FIG. 2A to FIG. 2E, the electronic device 100 may determine that a clear image frame (denoted as an image K) displayed in the preview window 123 in FIG. 2C is a highlight image frame. Then, the electronic device 100 may perform a shooting operation on the image, and output a highlight photo (denoted as a highlight photo K) and a corresponding thumbnail.

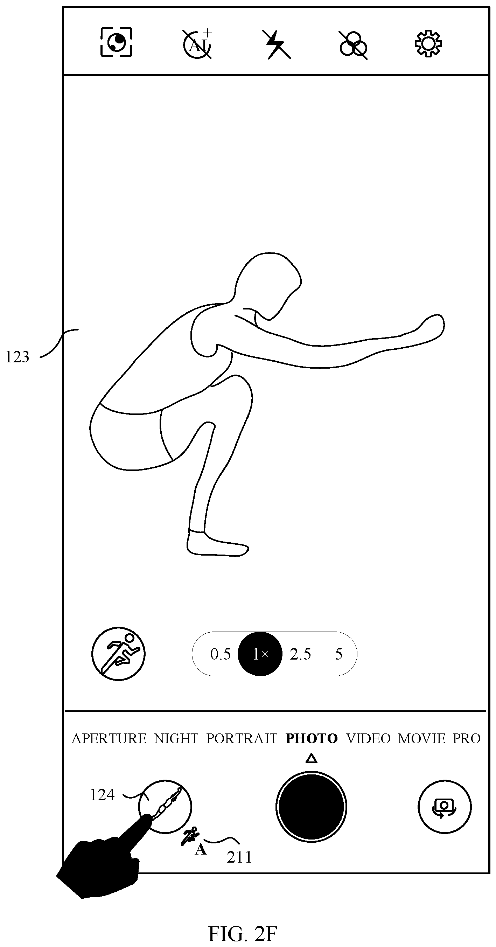

Refer to FIG. 2F. After the highlight photo and the corresponding thumbnail are obtained, the electronic device 100 may display the thumbnail in the playback control 124, to inform the user that the electronic device 100 has automatically snapped and generated a photo. Further, the electronic device 100 may display a prompt control, such as a control 211, near the thumbnail, to inform the user that the snapped photo is a photo automatically snapped by the electronic device 100 and not shot by the user. The prompt control may be referred to as a first identifier.

For example, the prompt control may alternatively be set to be semi-transparent, and is displayed on the thumbnail of the highlight photo K in an overlay form. Not limited to the prompt control shown by the control 211, the electronic device 100 may alternatively indicate, by using another identifier, that the shot photo is a photo automatically snapped by the electronic device 100. This is not limited in embodiments of this application.

In a shooting process shown in FIG. 2A to FIG. 2F, the long jump action of the athlete may be referred to as a first action. The state in which the human is in the flat-plate shape after the takeoff may be referred to as a first posture. The image K that includes the first posture may be referred to as a first image. The highlight photo K obtained based on the image K may be referred to as a first photo.

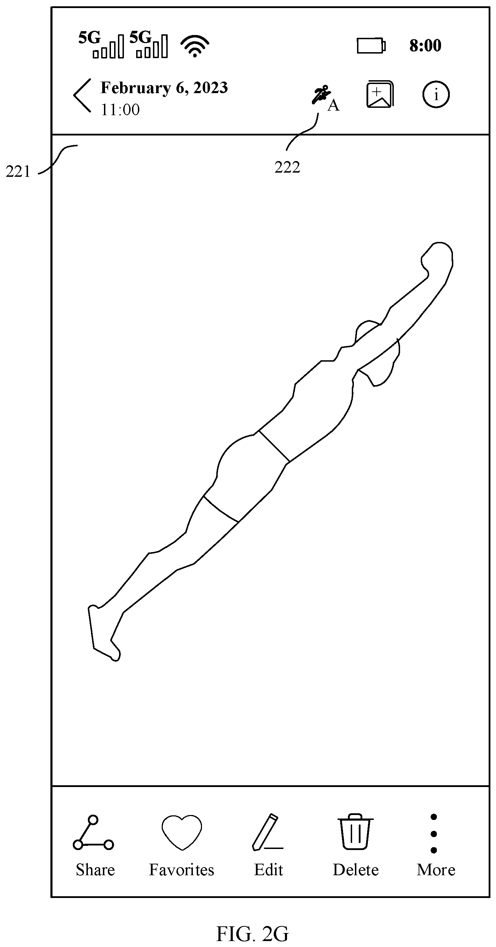

The electronic device 100 may detect a user operation performed on the playback control 124. In response to the foregoing operation, the electronic device 100 may display a user interface shown in FIG. 2G, to display a highlight photo corresponding to a thumbnail in the playback control 124.

As shown in FIG. 2G, the user interface may include an area 221. The area 221 may be configured to display a shot image, for example, the automatically-snapped highlight photo K. In this case, the user may view, in the area 221, an automatically-snapped highlight photo. The user interface may also include a prompt control, for example, a control 222 (a first identifier). When viewing a snapped photo, the user may determine, according to the foregoing control, that a currently displayed photo is a highlight photo automatically snapped by the electronic device 100 and not a photo shot by the user.

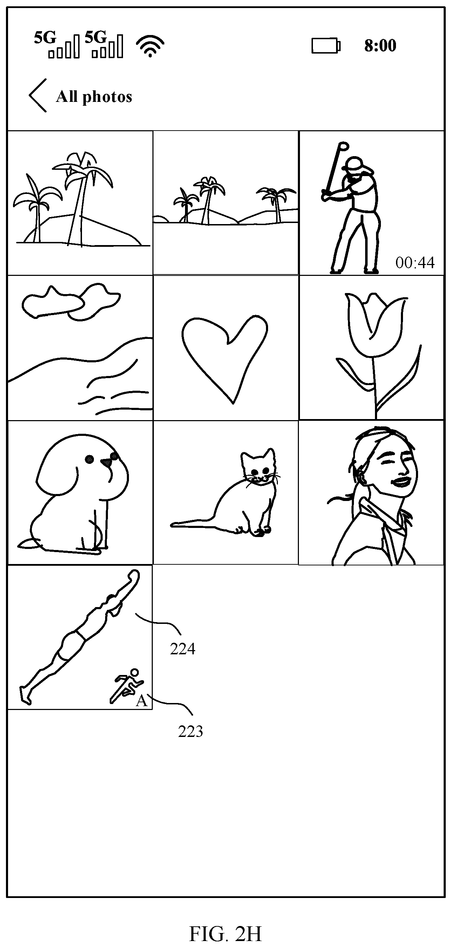

The electronic device 100 may provide a service for viewing a shot image. For example, a gallery application may be pre-installed on the electronic device 100. The user may view a shot image by using the gallery application. FIG. 2H is a user interface in which the gallery application on the electronic device 100 displays a shot image according to an embodiment of this application. The user interface shown in FIG. 2H is also referred to as a third interface. As shown in FIG. 2H, the electronic device 100 may display, in the user interface, a thumbnail of a photo automatically snapped by the electronic device 100, for example, an image 224 (the thumbnail of the first image). In this interface, the electronic device 100 may further display a prompt control, such as a control 223 (a first identifier), on a preview image of an automatically-snapped highlight photo. In this way, when the user views shot images, the user can distinguish between an automatically-snapped highlight photo and a photo shot by the user according to the prompt control.

In some scenarios, the user has opened the preview interface and is ready to shoot, but a magic moment is missed because the user forgets to tap the shooting control 122, or due to a reaction delay, a magic moment has passed when the user taps the shooting control 122. In these scenarios, a highlight photo cannot be obtained. In the foregoing method, after the automatic snapping is enabled, in a preview scenario, the electronic device 100 may automatically identify a magic moment, and snap a highlight photo. In this way, the electronic device 100 can assist the user in shooting, to prevent the user from missing the magic moment.

In some embodiments, in the "VIDEO" mode, the electronic device 100 may perform automatic snapping.

Specifically, in some embodiments, starting from a first frame of the "VIDEO" mode to which the electronic device 100 switches, the electronic device 100 may obtain a magic moment and snap a highlight photo with reference to operations shown in FIG. 2A to FIG. 2F until the electronic device 100 switches to another mode that does not support automatic snapping or exits shooting.

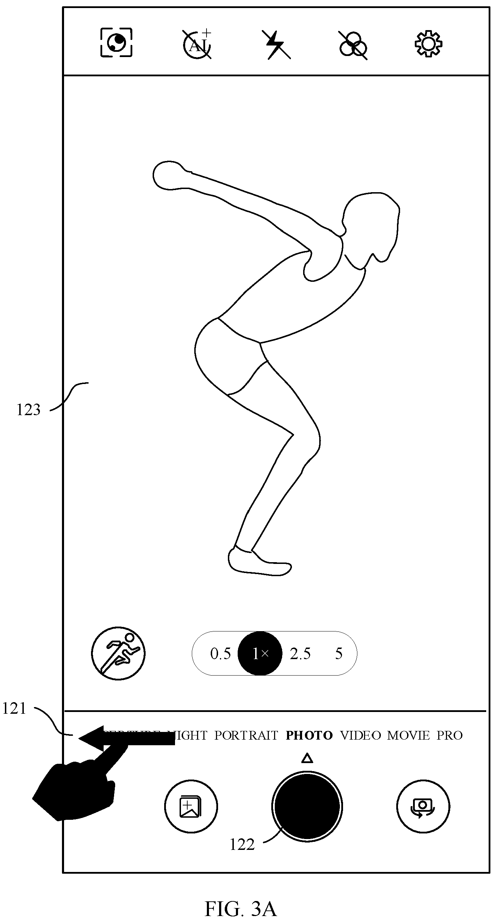

In some other embodiments, after switching to the "VIDEO" mode and starting video recording, the electronic device 100 may obtain a magic moment and snap a highlight photo until the video recording is ended. In other words, in the "VIDEO" mode, the electronic device 100 does not perform automatic snapping in a time period in which video recording is not started. FIG. 3A to FIG. 3J are a group of user interfaces for implementing automatic snapping in a video recording process according to an embodiment of this application.

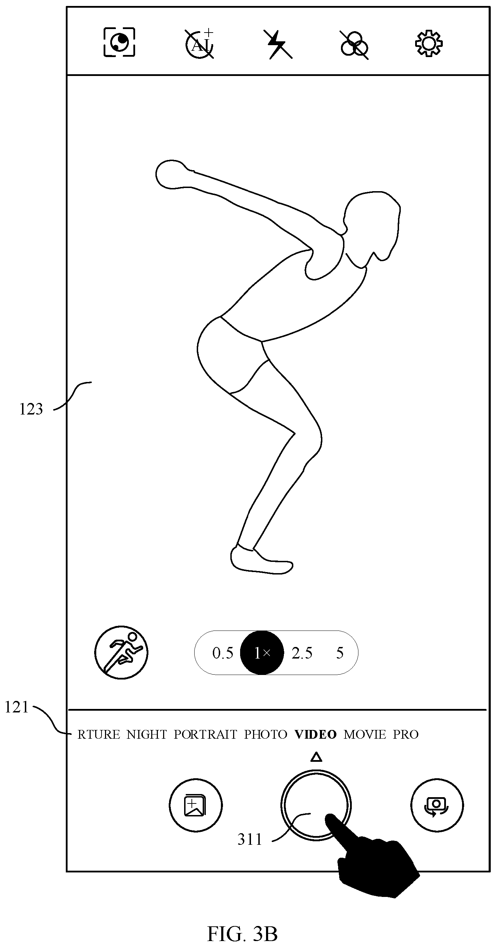

As shown in FIG. 3A, the electronic device 100 may detect a leftward sliding operation performed on the mode bar 121. In response to the foregoing operation, the electronic device 100 may switch from the "PHOTO" mode to the "VIDEO" mode, with reference to FIG. 3B. As shown in FIG. 3B, after entering the "VIDEO" mode, the electronic device 100 may change the original preview interface corresponding to the "PHOTO" mode to a preview interface corresponding to the "VIDEO" mode. Specifically, the electronic device 100 may change the original shooting control 122 in the "PHOTO" mode to a video recording start control 311 in the "VIDEO" mode.

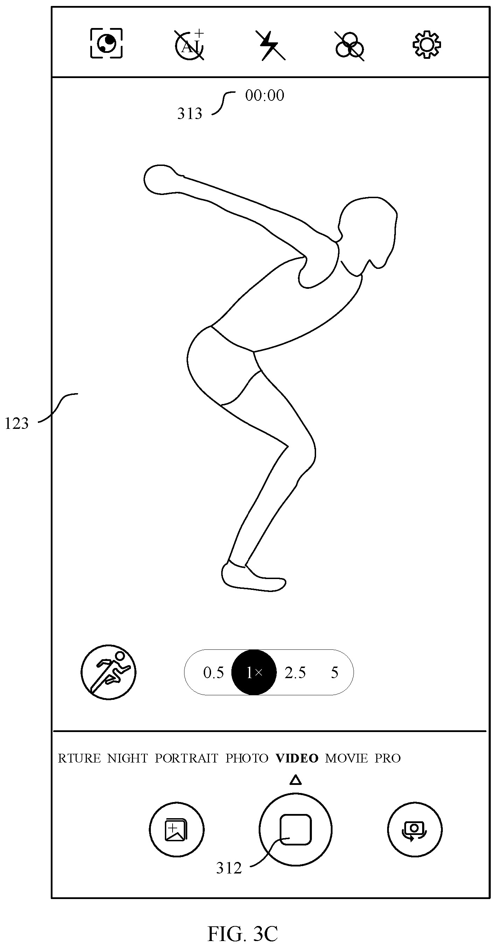

The electronic device 100 may detect a user operation performed on the video recording start control 311. In response to the foregoing operation, the electronic device 100 may start to record a video. Correspondingly, the electronic device 100 may display a video recording interface shown in FIG. 3C. The electronic device 100 may change the original video recording start control 311 to a video recording end control 312. In addition, the electronic device 100 may display a timestamp control 313 in the preview window 123, to indicate recorded duration.

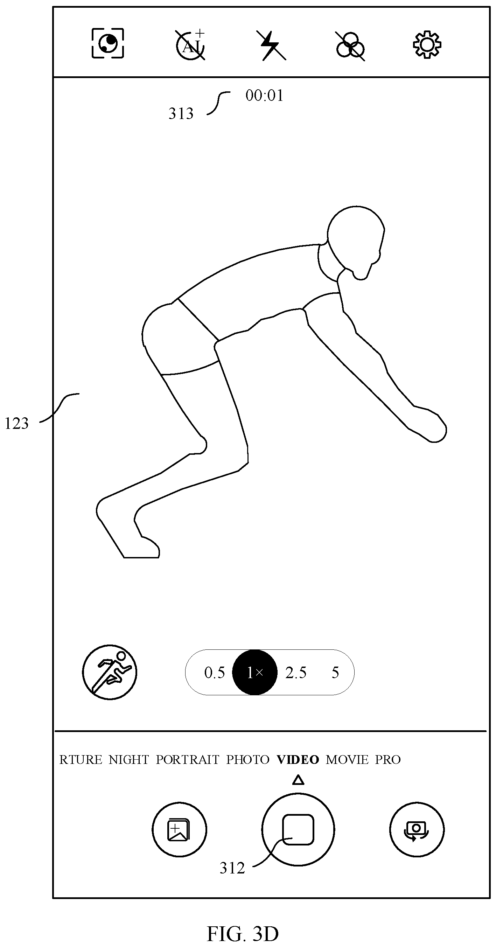

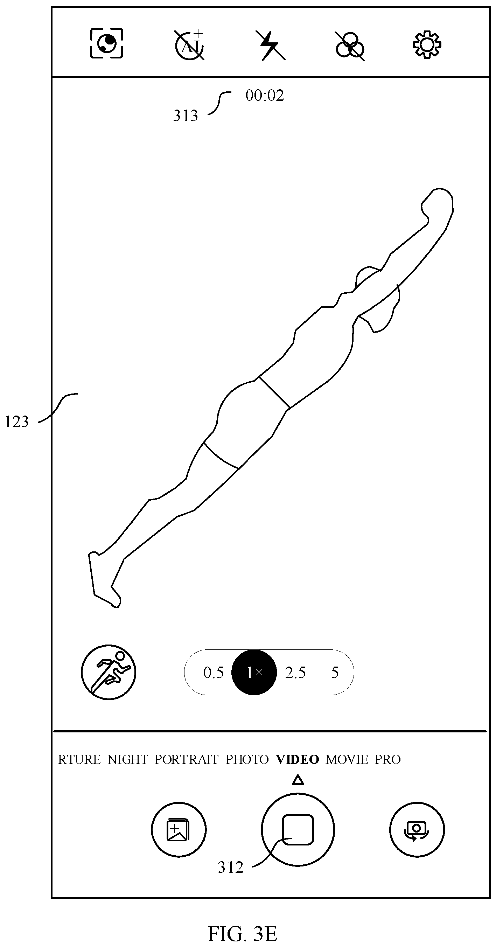

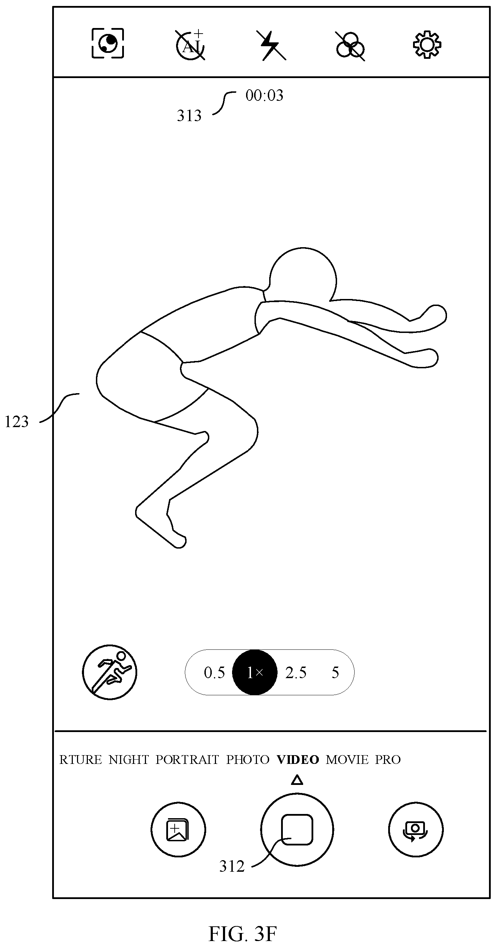

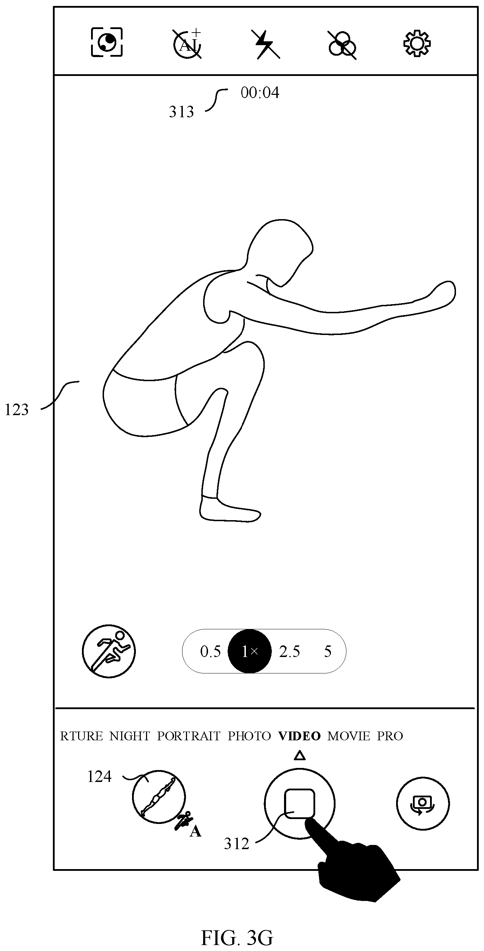

FIG. 3C, FIG. 3D, FIG. 3E, FIG. 3F, and FIG. 3G show examples of a group of video recording interfaces displayed by the electronic device 100 during recording of a long jumper. The preview window 123 may sequentially display motion states of the athlete shot by the camera at different moments in a long jump process. The timestamp control 313 may be updated as recording duration increases. In the foregoing process, the electronic device 100 may also use a preset algorithm corresponding to automatic snapping, and the electronic device 100 may identify the foregoing series of images, and determine whether each frame of image is wonderful.

In an implementation, in a video recording process, the electronic device 100 may update the playback control 124 in real time based on a snapped highlight photo, and display a thumbnail of the snapped highlight photo, so that the user can learn of the snapped highlight photo in real time.

Refer to FIG. 3G. After identifying a highlight image frame shown in the preview window 123 in FIG. 3E, the electronic device 100 may display a thumbnail of the image in the playback control 124. In this case, the user may determine, according to the playback control 124, that the electronic device 100 has snapped the image. Similarly, a prompt control that indicates automatic snapping may be carried in a lower right corner of the playback control 124.

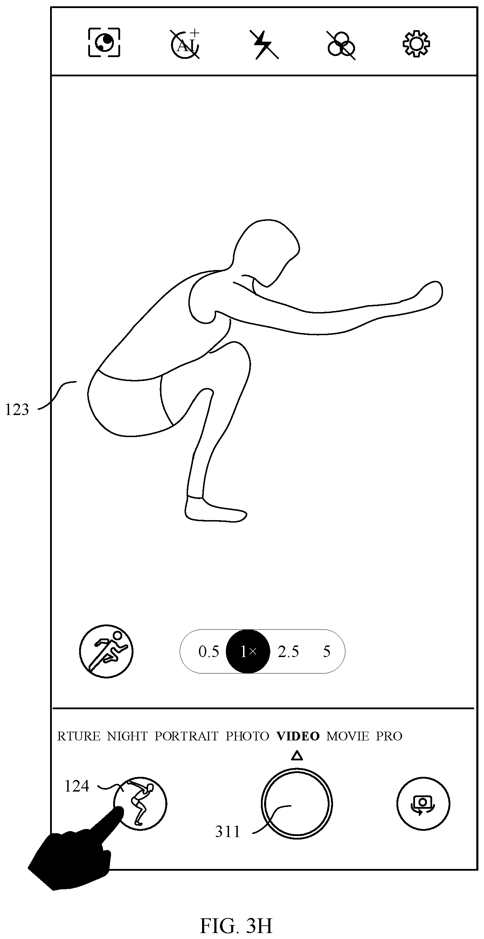

As shown in FIG. 3G, the electronic device 100 may detect a user operation performed on the video recording end control 312. In response to the foregoing operation, the electronic device 100 may end recording of the video, and display a user interface shown in FIG. 3H. As shown in FIG. 3H, the electronic device 100 may exit the video recording interface, and redisplay a preview interface, including redisplaying the video recording start control 311 to replace the video recording end control 312. In addition, the electronic device 100 may display a thumbnail of the newly recorded video in the playback control 124.

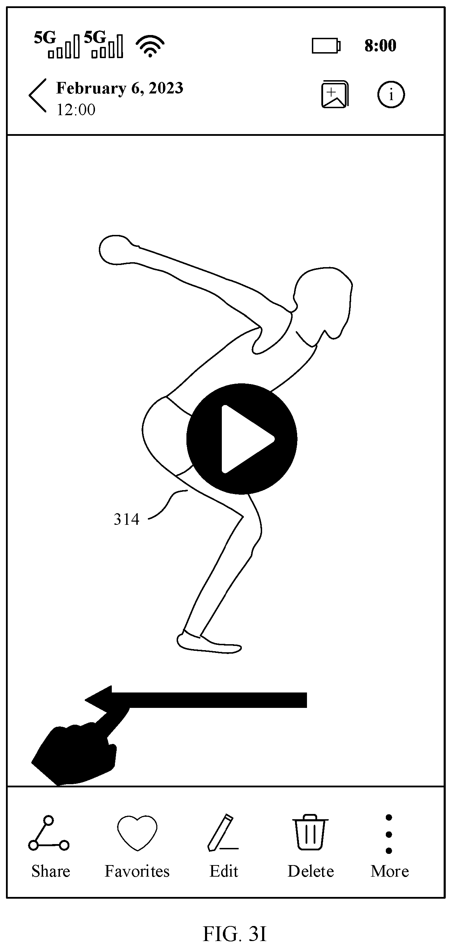

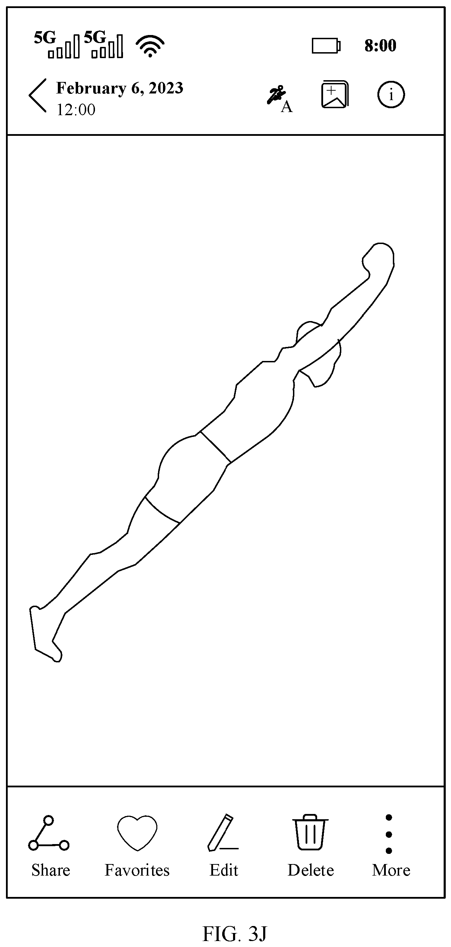

The electronic device 100 may detect a user operation performed on the playback control 124. In response to the foregoing operation, the electronic device 100 may display a user interface shown in FIG. 3I, to display the newly recorded video. As shown in FIG. 3J, the user may view complete content of the newly shot video by tapping a play button 314.

The electronic device 100 may further detect a leftward sliding operation performed on a screen. In response to the foregoing operation, the electronic device 100 may display a highlight photo automatically snapped by the electronic device 100 in the foregoing video recording process. For example, with reference to FIG. 3J, the electronic device 100 may display a highlight photo corresponding to the highlight image frame shown in the preview window 123 in FIG. 3E. It can be understood that the foregoing leftward sliding operation may alternatively be a rightward sliding operation. This is not limited herein.

Refer to FIG. 2H. In the user interface for displaying a shot image, a highlight photo snapped in a video recording process also carries an identifier of automatic snapping, which is used for distinguishing. Details are not described herein again.

In some embodiments, after video recording is started, a video recording interface may alternatively not include the playback control 124. After automatic snapping, the electronic device 100 does not display a thumbnail of a snapped photo in the video recording interface. After the video recording is ended, during viewing of a shot image, the electronic device 100 may display a photo automatically snapped in the foregoing video recording process.

Refer to FIG. 1B. The preview interface may further include a control 127. The control 127 may be configured to enable manual snapping. Manual snapping is a shooting method of obtaining, based on an operation of tapping to shoot performed by a user, images reported by a camera in a period of time corresponding to the operation, and then obtaining a best image frame from the images to output the best image frame as a photo.

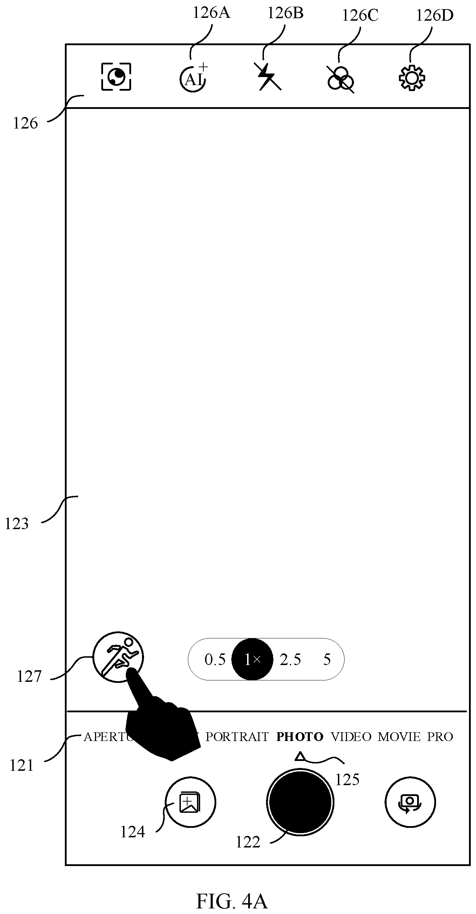

FIG. 4A to FIG. 4E are a group of user interfaces for implementing manual snapping according to an embodiment of this application.

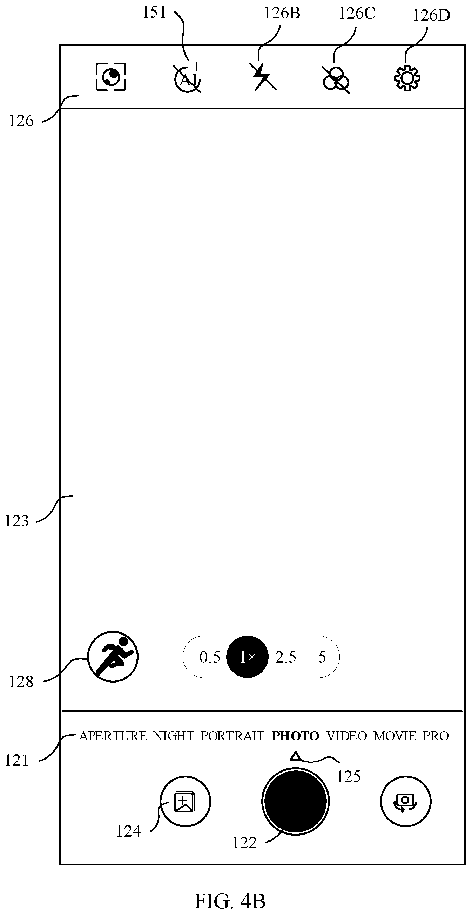

Refer to FIG. 4A. The electronic device 100 may detect a user operation performed on the control 127. In response to the foregoing operation, the electronic device 100 may enable a manual snapping function. Correspondingly, the electronic device 100 may display a user interface shown in FIG. 4B. As shown in FIG. 4B, the electronic device 100 may display a control 128 to replace the control 127. The control 128 may be configured to disable the manual snapping function.

Similarly, if there is a function that conflicts with the manual snapping, after the manual snapping is enabled, the electronic device 100 may automatically disable the corresponding conflicting function. For example, the electronic device 100 may disable the AI photography after the manual snapping is enabled. As shown in FIG. 4B, the electronic device 100 displays the control 151 to replace the original control 126A, to inform the user that the AI photography is disabled. Correspondingly, after the manual snapping is disabled, the electronic device 100 may automatically enable the function that is previously disabled due to the conflict. For example, after the manual snapping is disabled, the electronic device 100 may re-enable the AI photography.

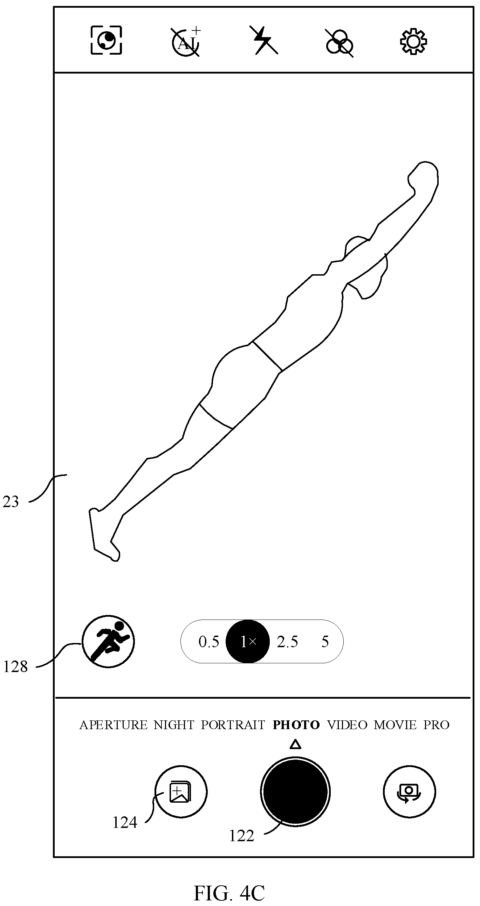

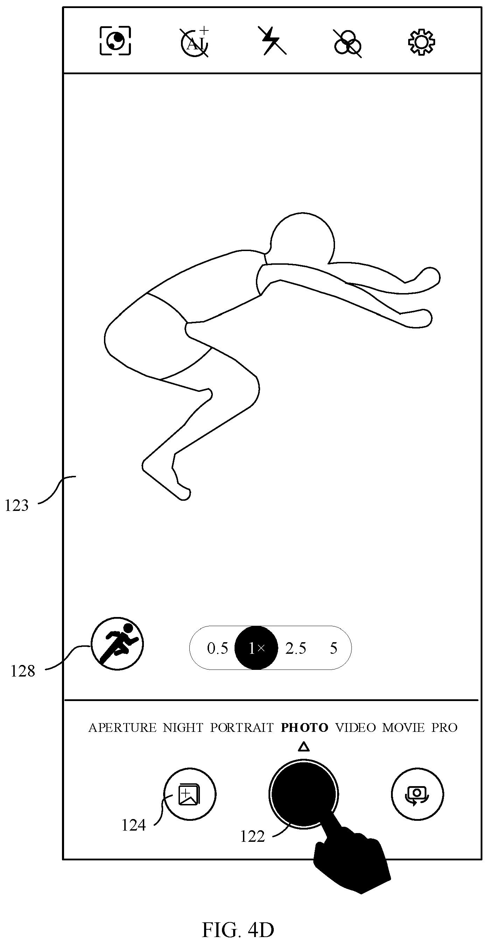

Refer to FIG. 4C. At a specific moment, the preview window 123 of the electronic device 100 displays a frame of image of a state in which a human is in a flat-plate shape after takeoff (an image K). After seeing the image K, the user feels that the image is wonderful. In this case, the user may tap the shooting control 122. When the electronic device 100 detects the tap operation performed by the user, the electronic device 100 has displayed an image following the image K, for example, an image K+1 or an image K+2 following the image K. For example, with reference to FIG. 4D, when the electronic device 100 detects the tap operation performed by the user, the preview window 123 has displayed an image of a landing state (an image L). That is, a current frame of the electronic device 100 is updated to the image L. In this case, in a conventional technology, the electronic device 100 outputs a photo corresponding to the image L.

In this embodiment of this application, the electronic device 100 may obtain all images reported by the camera in a period of time before and after the tap operation. Then, the electronic device 100 may evaluate all the images based on a preset algorithm, determine a frame with a highest evaluation in all the images, namely, a best frame, and finally output a photo corresponding to the best frame.

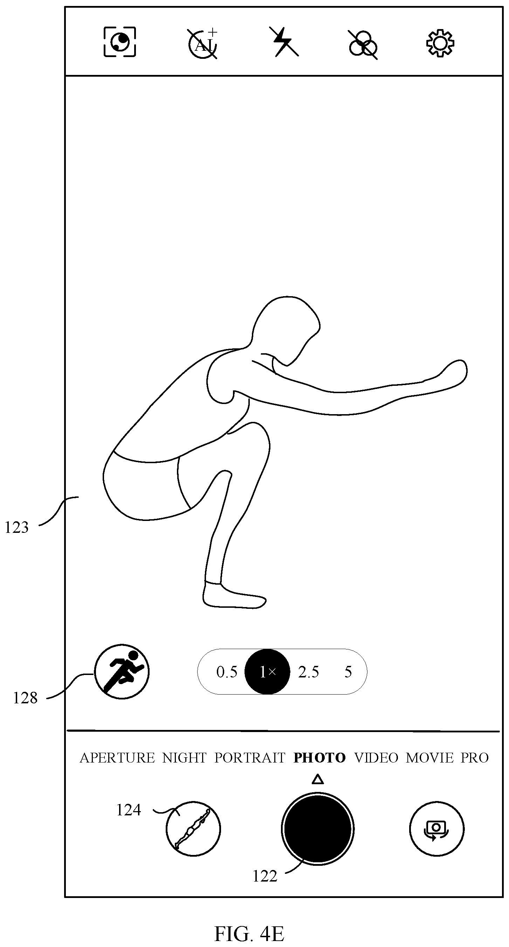

For example, as shown in FIG. 4D, after detecting a user operation performed on the shooting control 122, the electronic device 100 may obtain all images in a period of time that starts before the takeoff and that ends after the landing, and then determine, based on a preset algorithm, that the image K shown in the preview window 123 in FIG. 4C is a best frame. Then, the electronic device 100 may output a photo corresponding to the image K. Refer to FIG. 4E. The electronic device 100 may display a thumbnail corresponding to the image K in the playback control 124. Then, the user may view the shot photo through a user operation performed on the playback control 124.

In the foregoing method, with the use of a capability of the electronic device 100 to cache a preview stream in a period of time, impact of a human reaction delay and a transmission delay of the electronic device can be avoided, and the user can shoot a more desired photo and therefore obtain better shooting experience.

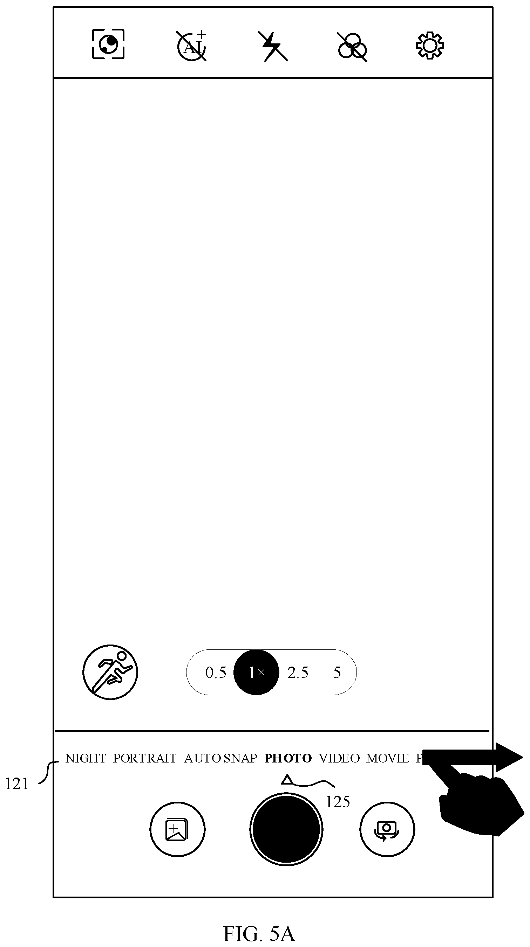

FIG. 5A to FIG. 5E are other user interfaces for enabling an automatic snapping function according to an embodiment of this application.

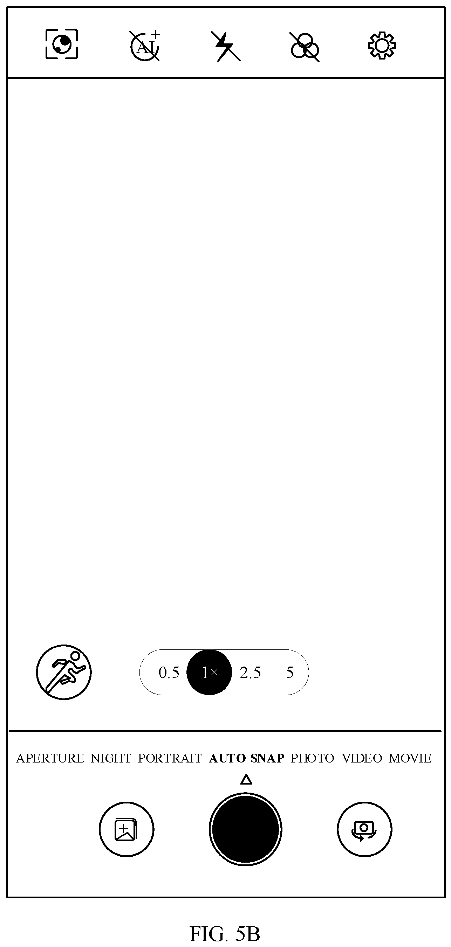

As shown in FIG. 5A, the mode bar 121 may include an "AUTO SNAP" option. In this case, the user may enable an automatic snapping function by setting an automatic snapping mode. For example, with reference to FIG. 5A and FIG. 5B, the electronic device 100 may detect an operation of dragging the mode bar 121 to slide rightward and making the "AUTO SNAP" option stop at the floating icon 125. In response to the foregoing operation, the electronic device 100 may switch to the automatic snapping mode, that is, enable the automatic snapping function.

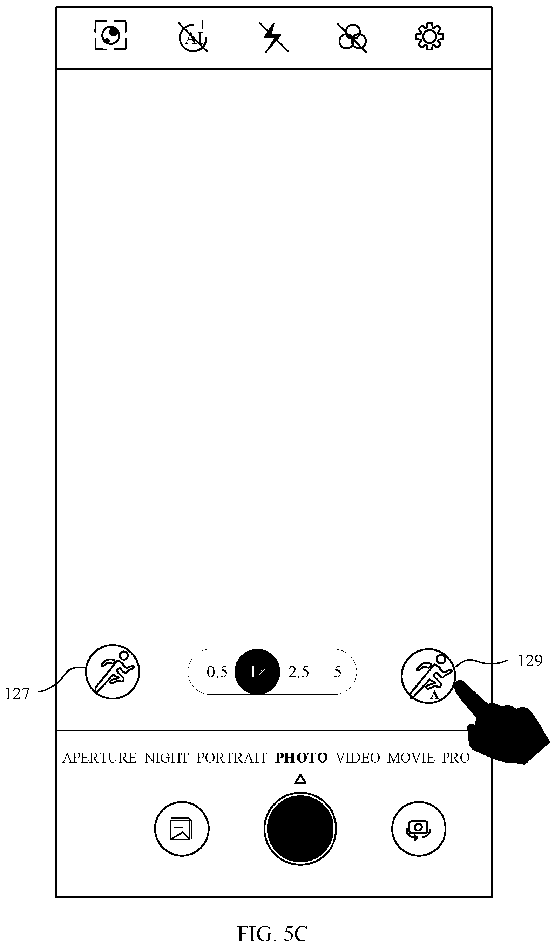

Optionally, with reference to FIG. 5C, the electronic device 100 may alternatively set a control 129 in the preview interface. The control 129 is configured to enable the automatic snapping. With reference to the method of enabling the manual snapping by using the control 127 shown in FIG. 4A and FIG. 4B, the electronic device 100 may provide, for the user by using the control 129, a function of enabling the automatic snapping. Details are not described herein again.

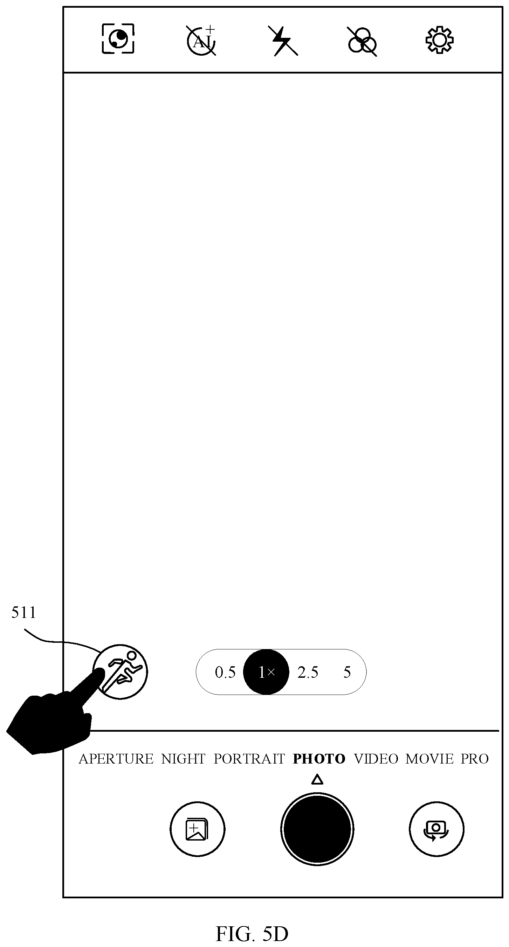

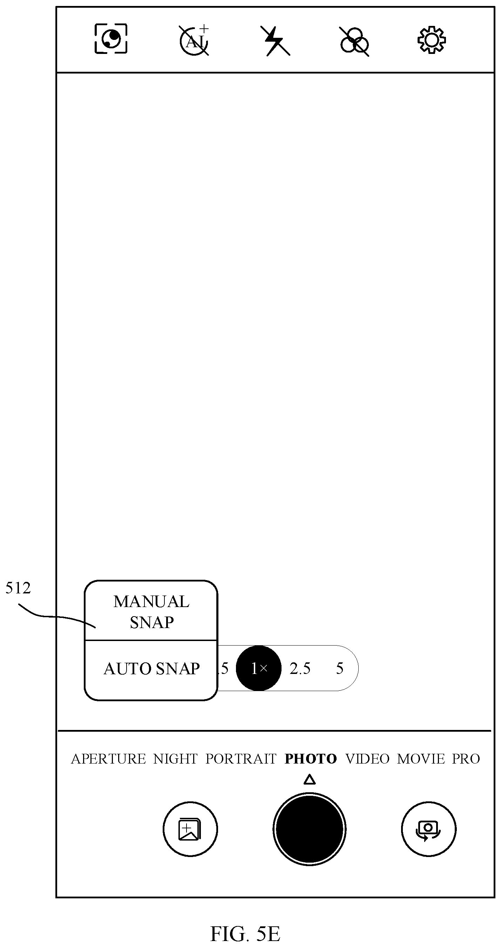

Alternatively, with reference to FIG. 5D and FIG. 5E, the electronic device 100 may set a control 511 in the preview interface. After a user operation performed on the control 511 is detected, the electronic device 100 may display a control 512. The control 512 may display an "AUTO SNAP" option and a "MANUAL SNAP" option. After a user operation performed on the "AUTO SNAP" option is detected, the electronic device 100 may enable the automatic snapping. After a user operation performed on the "MANUAL SNAP" option is detected, the electronic device 100 may enable manual snapping.

The electronic device 100 may simultaneously enable the automatic snapping and the manual snapping. In some embodiments, when a time interval between a highlight image frame determined in automatic snapping and a best frame determined in manual snapping is short, the electronic device 100 may save the manually-snapped best frame, and discard the automatically-snapped highlight image frame.

Specifically, the electronic device 100 may set a time interval t (or a quantity of frames), for example, 1s (or 30 frames). If the time interval between the automatically-snapped highlight image frame and the manually-snapped best frame is within 1s, the electronic device 100 may discard the automatically-snapped highlight image frame. If the time interval between the automatically-snapped highlight image frame and the manually-snapped best frame is greater than 1s, the electronic device 100 may save the automatically-snapped highlight image frame and the manually-snapped best frame.

In this way, the electronic device 100 can avoid generating a photo that is very similar to a photo shot by the user, to avoid redundancy and a waste of storage resources.

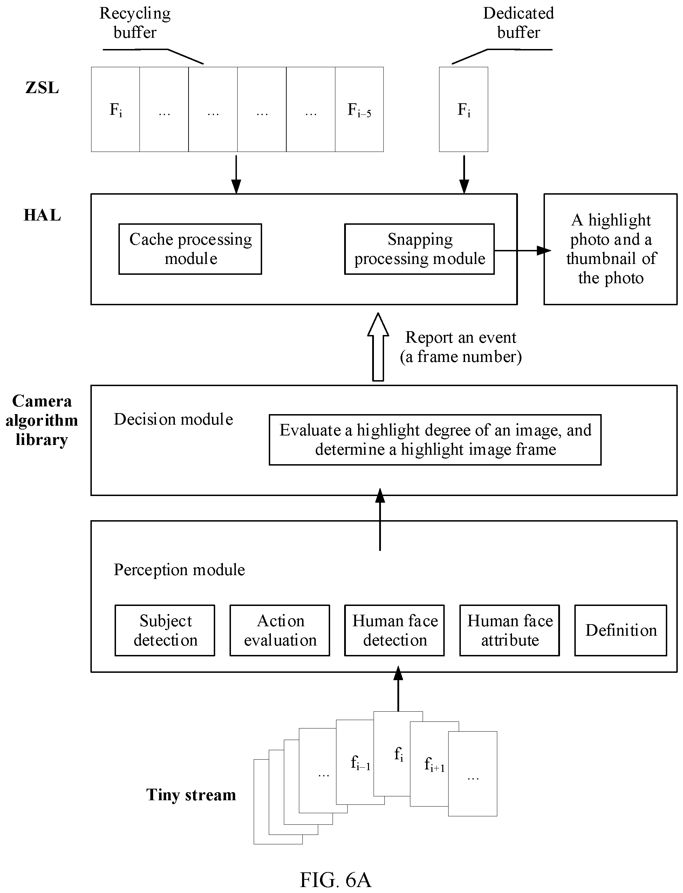

FIG. 6A is a schematic diagram of a method for implementing automatic snapping according to an embodiment of this application.

An image obtained after a photosensitive element in a camera converts a captured light source signal into an electrical signal may be referred to as an original image, and is also referred to as a RAW image. The foregoing process is also referred to as that the camera captures an image. A process in which the camera sends the captured image to a functional module in a system structure of an electronic device 100 may be referred to as reporting. A process in which a module responsible for shooting and outputting a photo (for example, a snapping processing module shown in FIG. 6A) processes the image reported by the camera, and then outputs the image as a photo or another image resource and saves the photo or the another image resource may be referred to as shooting.

In a framework of zero shutter lag (zero shutter lag, ZSL), a recycling buffer is disposed in the electronic device 100. The buffer is configured to store a group of most recent RAW images reported by the camera. For example, a size of the recycling buffer is 6, that is, six most recent frames of RAW images reported by the camera may be stored, denoted as Fi-5 to Fi. After the camera reports an (i+1)^{th} frame of RAW image, the (i+1)^{th} frame of RAW image Fi+1 is written to the recycling buffer, and the image Fi-5 earliest written to the buffer is deleted. In this case, the images stored in the recycling buffer are updated to Fi-4 to Fi+1.

A smaller image stream obtained by performing downsampling on a RAW image stream may be referred to as a processing stream, and is also referred to as a Tiny stream. A frame of image in the Tiny stream may be referred to as a Tiny image. The RAW image stream herein may directly come from RAW images reported by the camera, or may directly come from RAW images stored in the recycling buffer. For example, a size of a RAW image may be 3024*4032 (p), and a size of an image obtained through downsampling in the Tiny stream may be 378*502 (p).

In some embodiments, an image in a Tiny stream may alternatively be extracted from RAW images reported by the camera or RAW images stored in the recycling buffer. For example, a group of RAW images reported by the camera or a group of RAW images stored in the recycling buffer includes a 1^{st} frame to a 20^{th} frame, and a module that performs downsampling to obtain a Tiny stream may extract one frame at an interval of three frames from the 1^{st} frame to the 20^{th} frame for downsampling, for example, the 1^{st} frame, the 5^{th} frame, and the 9^{th} frame, to generate corresponding Tiny images.

A Tiny image is aligned with a RAW image by frame number. For example, a frame number of an i^{th} frame of RAW image reported by the camera is i. A Tiny image obtained by performing downsampling on the i^{th} frame of RAW image Fi is an i^{th} frame of Tiny image, which is denoted as fi. A frame number of fi is i.

A dedicated buffer is further disposed in the electronic device 100. The buffer is configured to store a highlight image frame in a RAW image format. The electronic device 100 reads the highlight image frame from the dedicated buffer, and then outputs a corresponding highlight photo.

A perception module and a decision module are preconfigured in the electronic device 100. A plurality of detection algorithms are preset in the perception module, and are used to obtain various data indicating image content and image quality. The decision module may determine an image comprehensive score based on the data, and determine a highlight image frame according to the comprehensive score.

As shown in FIG. 6A, the perception module may include a subject detection algorithm, an action evaluation algorithm, a human face detection algorithm, a human face attribute algorithm, and a definition algorithm. The subject detection algorithm, the action evaluation algorithm, the human face detection algorithm, and the human face attribute algorithm may be referred to as image content extraction algorithms, and may be used to obtain image content. The definition algorithm may be referred to as an image quality detection algorithm, and is used to obtain image definition.

Specifically, the subject detection algorithm is used to obtain a specific shot object in an image, for example, a human, a face of a cat, or a dog. The specific shot object may be referred to as a first object. In particular, for shot objects other than a human, for example, the cat and the dog, the subject detection algorithm may further obtain local objects of these objects, for example, a face of the cat and a face of the dog. It can be understood that a specific type of the shot object is not limited in embodiments of this application.

After the preset shot object is identified, the subject detection algorithm may output an object box. Further, the object box marks a size and a position of the object in the image. In this case, the decision module may determine, according to whether the subject detection algorithm outputs an object box, whether the image includes a specific shot object. Further, the decision module may determine a quantity, sizes, and positions of objects based on a quantity, sizes, and positions of output object boxes, and evaluate the object. For example, the larger the object box is and the more centered the position is, the higher the score of the shot object corresponding to the image box is.

The action evaluation algorithm is used to obtain an action of the shot object, such as jumping, glancing back, throwing an object, playing table tennis, playing badminton, running, splashing water, playing baseball, playing rugby, or playing Frisbee, determine a completion degree of the action in any frame of image based on a best completion point of the action, and then output an action score of the image. An image with a higher action completion degree corresponds to a higher action score. The specific action such as jumping, glancing back, or throwing the object described above may be referred to as a first action. The decision module may determine, based on the action score output by the perception module, whether the object in the image makes a specific action and a completion degree of the action of the object in each image frame.

For example, during a jump, a motion state in which the object reaches a highest point after leaving the ground may be referred to as a best completion point of the jump. When the object in an input fi^{th} frame of Tiny image is in a motion state of leaving the ground and reaching the highest point, the action evaluation algorithm may output a motion score of 1 (a highest score) for the image. When the object in the image does not leave the ground or leaves the ground but does not reach the highest point, the action evaluation algorithm may output a motion score less than 1, such as 0.3 or 0.5, for the image. Specifically, the action evaluation algorithm may determine, based on a distance between the object and the highest point, motion scores of different moments at which the object leaves the ground but does not reach the highest point.

It can be understood that the best completion point needs to be determined based on a motion track of the shot object in a period of time. Therefore, after a plurality of frames of images in a period of time are received, the action evaluation algorithm may determine a best completion point in the plurality of frames of images, then evaluate motion states in the plurality of frames of images based on the best completion point, and then input action scores of the plurality of frames of images to the decision module. In some embodiments, an action evaluation module may further identify an action of a non-human object, for example, a run or a jump of a cat or a dog.

The human face detection algorithm is used to obtain a human face in an image. After a human face is identified, the human face detection algorithm may output a human face box. Further, the human face box marks a size and a position of the human face in the image. In this case, the decision module may determine, according to whether the human face detection algorithm outputs a human face box, whether the image includes a human face. Further, the decision module may determine a quantity, sizes, and positions of human faces based on a quantity, sizes, and positions of output human face boxes, and then evaluate the human face. For example, the larger the human face box is and the more centered the position is, the higher the score of the human face corresponding to the human face box is.

The human face attribute algorithm is used to obtain information about a human face in an image, for example, curvature of lips or a distance between upper and lower eyelids. The decision module may determine, based on the curvature of the lips or the distance between the upper and lower eyelids, whether there is a smile on the human face, an eye on the human face is open, or the like. Further, the decision module may determine a degree of the smile on the human face based on the curvature of the lips, and determine an opening degree of the eye on the human face based on the distance between the upper and lower eyelids. In this case, the decision module may evaluate human face performance based on the degree of the smile on the human face or the opening degree of the eye on the human face, and output a human face performance score.

In an implementation, when the curvature of the lips is larger, the degree of the smile on the human face is higher, and the human face performance score determined by the decision module is also higher. In an implementation, when the distance between the upper and lower eyelids is larger, the opening degree of the eye on the human face is higher, and the human face performance score determined by the decision module is also higher. When the two implementations are combined, weights of impact of eye opening and smiling on the human face performance score may be the same or different.

In an optional implementation, human face detection may be performed after a human is identified in subject detection. Similarly, the human face attribute algorithm may be executed after the human face detection algorithm identifies a human face. In this case, the human face detection algorithm may obtain a human face by using an image that includes a human and that is identified in the subject detection, and the human face attribute algorithm may obtain information about each human face by using a human face image output by the human face detection algorithm, to reduce computing costs and improve algorithm efficiency.

The definition algorithm is used to obtain image definition. A definition score of a jitter-free and noise-free image is higher.

It can be understood that more detection algorithms may be preset in the perception module, to obtain more information indicating image content and image quality. Alternatively, the perception module may directly obtain information indicating image content and image quality, such as exposure, from data reported by the camera and/or another sensor. This is not limited in embodiments of this application.

The decision module may determine, based on various data that is output by the perception module and that indicates image content and image quality, a comprehensive score, namely, a highlight degree, that reflects whether an image is wonderful and a degree of wonderfulness.

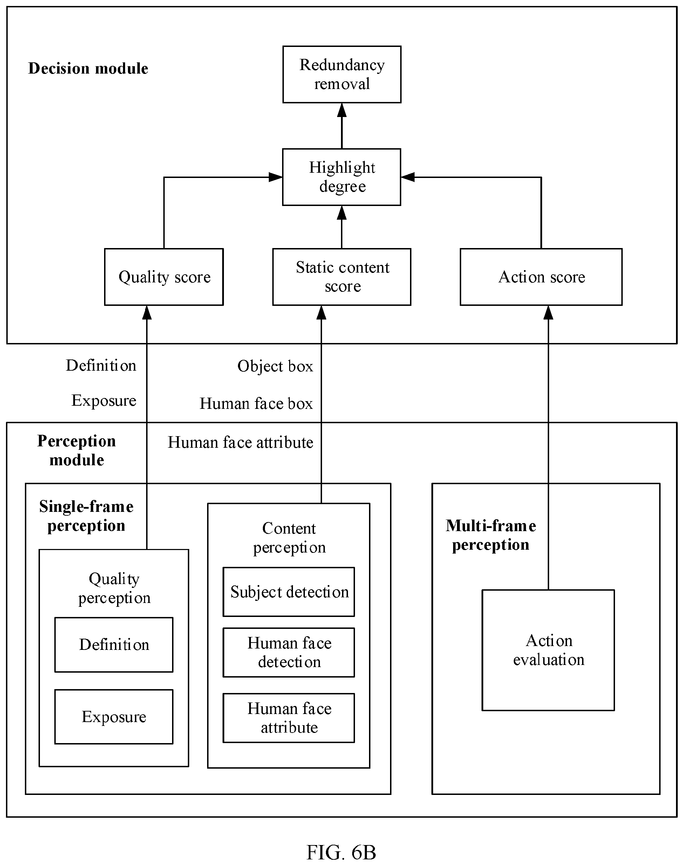

FIG. 6B is a schematic diagram of determining a highlight degree of an image according to this application.

As shown in FIG. 6B, the perception module may include a single-frame perception module and a multi-frame perception module. The single-frame perception module may determine, by using one frame of image, one type of information of the image, for example, whether a specific object is included, whether a human face is included, an attribute of a human face, definition, or exposure. The single-frame perception module is applicable for obtaining one type of information, such as an action score, of one or more frames of images from a group of images.

Herein, fi is used as an example. After fi obtained through downsampling is input into the perception module, the decision module may obtain data indicating image content and image quality of fi: a quantity, sizes, and positions of specific objects, a completion degree of an action, a quantity, sizes, and positions of human faces, a degree of a smile on a human face, an opening degree of an eye on a human face, definition, exposure, or the like. Then, the decision module may determine a highlight degree of fi based on the foregoing data, and further determine whether fi is wonderful. The greater the value of the highlight degree is, the more wonderful the corresponding image is.

In an implementation, the decision module may combine, according to image content and image quality, and single-frame and multi-frame, a plurality of types of information output by the perception module, to reduce a quantity of items, and then determine a final highlight degree based on scores of items obtained after the reduction.

As shown in FIG. 6B, the decision module may fuse information that reflects image quality and that is output by a quality perception module, for example, definition and exposure, to obtain a quality score indicating image quality. The foregoing fusion is, for example, weighted averaging. The decision module may fuse an object box, a human face box, and an attribute of a human face that are output by a content perception module, to obtain a static content score indicating static image content. In this case, the decision module may obtain scores of three items: the quality score, the static content score, and the action score (a dynamic content score).

The decision module may determine the static content score based on one or more of the object box, the human face box, and the attribute of the human face that are output by the content perception module. For example, the decision module may first determine a shot object in an image. When no specific object is identified, output results of the human face detection algorithm and the human face attribute algorithm are correspondingly null values. In this case, the decision module may determine that the static content score is 0 according to that a subject detection module does not output a valid object box. When a human face is identified, the decision module may determine the static content score based on an object box output by the subject detection module, a human face box output by a human face detection module, and/or an attribute of the human face (eye opening/smiling).

When the subject detection algorithm identifies that the image includes no human, for example, when the shot object is a cat or a dog, output results of the human face detection algorithm and the human face attribute algorithm are correspondingly null values. In this case, the decision module may determine the static content score based on an object box output by the subject detection module, without considering the output results of the human face detection algorithm and the human face attribute algorithm, to prevent a highlight degree of the image from being reduced due to the null values of the human face detection algorithm and the human face attribute algorithm. Examples are not enumerated herein.

After the quality score, the static content score, and the action score are determined, the decision module may determine the highlight degree based on one or more of the quality score, the static content score, and the action score.

For example, when no specific object and specific action are included in the image, both the static content score and the action score are 0 or invalid values. In this case, the decision module may determine a comprehensive score of the image only based on the quality score, to prevent the highlight degree of the image from being reduced because the static content score and the action score are 0 or invalid values. For another example, when the image includes no specific object but includes no specific action, the action score is 0 or an invalid value. In this case, the decision module may determine a comprehensive score of the image only based on the quality score and the static content score, to prevent the highlight degree of the image from being reduced because the action score is 0 or an invalid value.

Due to a difference between a content perception algorithm (the subject detection algorithm, the human face detection algorithm, or the human face attribute algorithm) and an action detection algorithm, in some embodiments, the action evaluation module may determine that a specific action is included in a group of images, and may determine action scores of the images based on completion degrees of the action in the images, but the content perception algorithm cannot identify a specific object and static performance of the specific object. In this case, the decision module may alternatively determine a comprehensive score of the image based on the quality score and the action score, to prevent the highlight degree of the image from being reduced because the static content score is 0 or an invalid value.

A highlight degree threshold may be set in the decision module. When the highlight degree of the image determined according to the foregoing method is greater than the highlight degree threshold, the decision module determines that the image is a highlight image. It can be understood that when a final highlight degree determined by the decision module comes from scores of a plurality of items, the decision module may further set thresholds corresponding to the scored items, for example, a quality score threshold, a static content score threshold, and an action score threshold.

When the highlight degree comes only from a quality score, a highlight degree threshold corresponding to the highlight degree may be referred to as a first preset condition. When the highlight degree comes from scores of a plurality of items, for example, a quality score, a static content score threshold, and an action score threshold, a quality score threshold may be referred to as a first preset condition.

A specific method for determining a comprehensive score of an image based on an output result of the perception module is not limited in embodiments of this application.

The electronic device 100 further includes a hardware abstract layer (hardware abstract layer, HAL). A cache processing module and the snapping processing module may be disposed in the HAL. The cache processing module may be configured to obtain a highlight image frame in a RAW image format and write the highlight image frame to the dedicated buffer. The snapping processing module is configured to process a highlight image frame and output a highlight photo.

Herein, fi is used as an example. When fi satisfies a candidate condition and/or a highlight degree of fi reaches a preset value thres_1, the decision module may determine that fi is a highlight image frame. The candidate condition may be set based on an output result of the perception module. For example, the candidate condition includes one or more of the following: a specific object is included, a quantity, sizes, and positions of specific objects satisfy a preset requirement, a first action is included, a human face is included, a quantity, sizes, and positions of human faces satisfy a preset requirement, a smile is on the human face, an eye on the human face is open, definition is greater than a threshold, exposure is within a preset interval, or the like.

In this case, the decision module may report, to the HAL, an event of discovering the highlight image frame. The event may include a frame number of the highlight image frame. Otherwise, the decision module does not report to the HAL, or returns indication information indicating that there is no highlight image frame.

After the frame number i reported by the decision module is received, the cache processing module may obtain the RAW image Fi corresponding to the frame number i from the recycling buffer, and write Fi to the dedicated buffer. The snapping processing module may obtain the highlight image frame Fi from the dedicated buffer, and then output the highlight image frame Fi as a highlight photo. In a process of generating the highlight photo, the snapping processing module may simultaneously generate a corresponding thumbnail for previewing.

Optionally, in a process of outputting the highlight image frame Fi as a highlight photo, the snapping processing module may further optimize the highlight image frame Fi by using another image processing algorithm, to output a highlight photo with a better effect. The another image processing algorithm includes but is not limited to a saturation optimization algorithm, an exposure compensation algorithm, a face/body beautifying algorithm, and the like.

In some embodiments, the cache processing module may alternatively obtain a plurality of frames of RAW images from the recycling buffer, and write the plurality of frames of RAW images to the dedicated buffer. The snapping processing module may synthesize a highlight image based on the plurality of frames of RAW images, to further improve quality of a highlight photo.

For example, the cache processing module may obtain, from the recycling buffer based on the received frame number i, the RAW image Fi corresponding to the frame number i and RAW images preceding and following Fi such as Fi-1 to Fi-3 and Fi+1, and write the RAW images to the dedicated buffer. Optionally, the cache processing module may alternatively obtain only the RAW image Fi corresponding to the frame number i and a RAW image preceding Fi. Alternatively, the cache processing module may obtain only the RAW image Fi corresponding to the frame number i and a RAW image following Fi, or the like. The plurality of frames of RAW images including Fi are not specifically limited in embodiments of this application.

Fi-3 to Fi+1 are used as an example. The snapping processing module may perform multi-frame fusion on Fi-3 to Fi+1, to obtain a frame of fusion image Fi-N. Then, the snapping processing module may generate a highlight photo based on Fi-N. In this method, Fi (for example, an image K) may be referred to as a fourth image, and Fi-N obtained by performing the multi-frame fusion on Fi-3 to Fi+1 including Fi may be referred to as a first image.

Further, the cache processing module may determine, according to a shooting mode, to obtain one frame of RAW image or a plurality of frames of RAW images from the recycling buffer. For example, in a night mode, the cache processing module may obtain a plurality of frames of RAW images from the recycling buffer; or in a non-night mode, such as a portrait mode or a high dynamic mode, the cache processing module may obtain only one frame of RAW image from the recycling buffer.

Compared with directly inputting a RAW image to obtain image content information of the RAW image, using a small-size Tiny image can greatly reduce computing costs of each detection algorithm in the perception module, improve a rate at which each detection algorithm outputs corresponding image content information, and effectively avoid problems of frame drops and stuttering.

Further, in an implementation, the electronic device 100 may simultaneously enable all detection algorithms, and set working frequencies of the detection algorithms to be the same as a frequency at which the camera reports images. For example, when each frame of Tiny image is received, the subject detection algorithm in the perception module may process the Tiny image to obtain a shot object in the Tiny image, the action evaluation algorithm may process the Tiny image to determine an action score of the Tiny image, and the human face detection algorithm, the human face attribute algorithm, and the definition algorithm each may process the Tiny image to obtain corresponding image content information.

In another implementation, the electronic device 100 may simultaneously enable all detection algorithms, but working frequencies of different detection algorithms are different. For example, the electronic device 100 may set a working frequency of the subject detection algorithm to be the same as a frequency at which the camera reports images, that is, the subject detection algorithm performs processing once per frame. The electronic device 100 may set a working frequency of the action evaluation algorithm to 1/4 of the frequency at which the camera reports images, that is, the action evaluation algorithm performs processing once every four frames. The electronic device 100 may set a working frequency of the human face detection algorithm to 1/2 of the frequency at which the camera reports images, that is, the action evaluation algorithm performs processing once every two frames. The electronic device 100 may set a working frequency of the definition algorithm to be the same as the frequency at which the camera reports images, and the like. Examples are not enumerated herein. In this way, the electronic device 100 can further reduce computing costs of the perception module and reduce power consumption.

In particular, in a scenario in which working frequencies of different detection algorithms are different, a detection algorithm that does not perform processing may output a result obtained in previous detection, to prevent a score of this item from being excessively low because detection is not performed, and avoid reducing stability and accuracy of detection of a magic moment.

In another implementation, the electronic device 100 may alternatively selectively enable a part of detection algorithms. Specifically, the electronic device 100 may determine, based on an object preset by a user and/or a motion state of an object, a detection algorithm that needs to be enabled. Other detection algorithms may be disabled. For example, when an object to be automatically snapped set by the user includes only a cat or a dog, the electronic device 100 may disable the human face detection algorithm and the human face attribute algorithm.

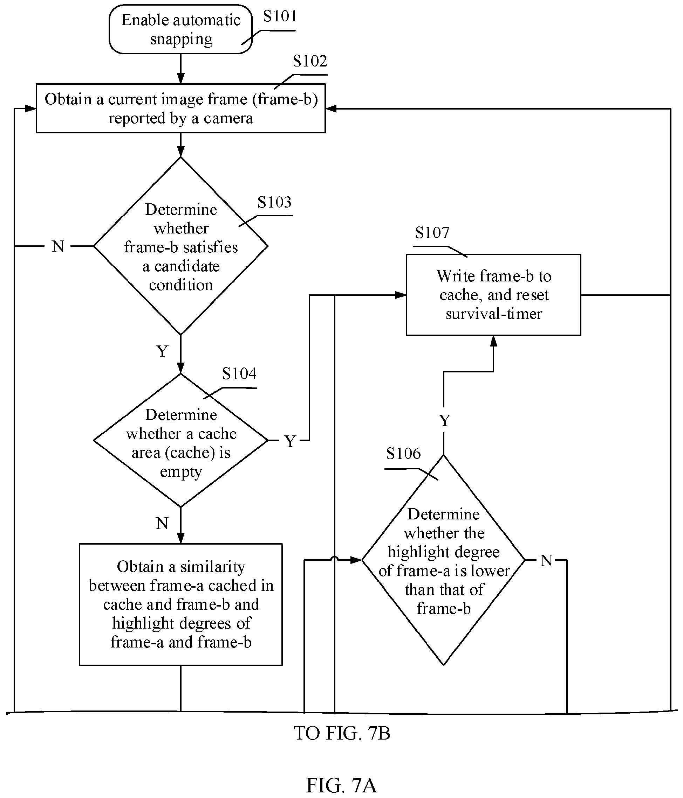

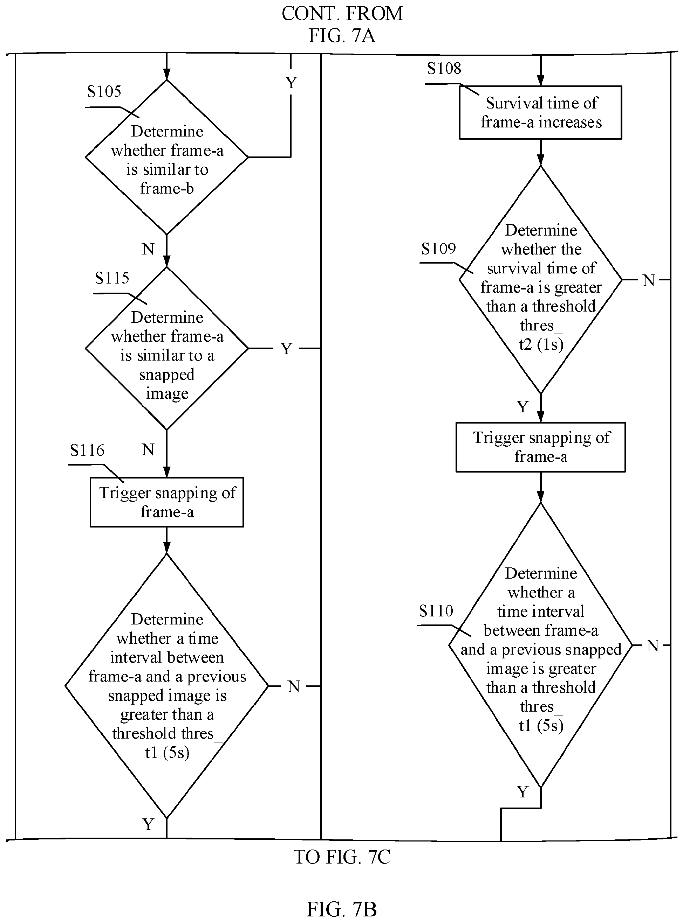

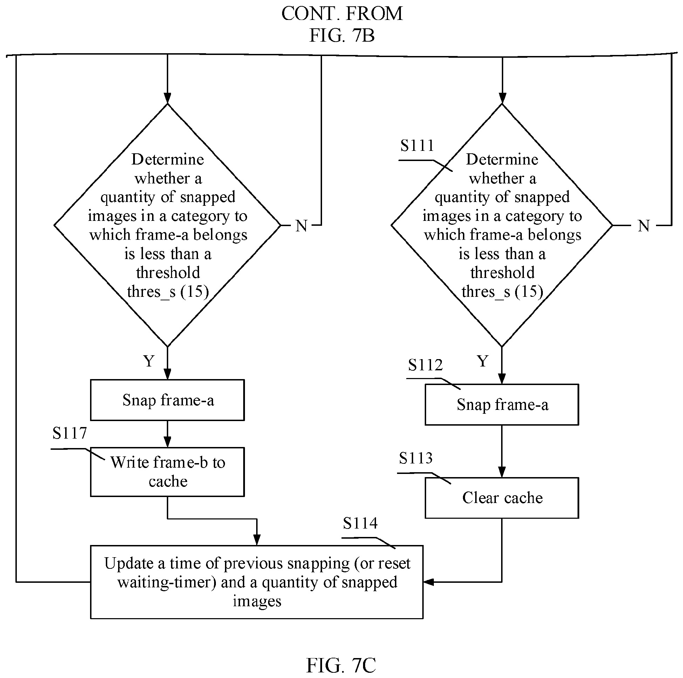

FIG. 7A to FIG. 7C are a flowchart of implementing automatic snapping according to an embodiment of this application.

S101: Enable automatic snapping.

Refer to the user interfaces shown in FIG. 1C to FIG. 1E (or the user interfaces shown in FIG. 5A to FIG. 5E). The electronic device 100 may detect a user operation of enabling an automatic snapping function. In response to the foregoing operation, the electronic device 100 may enable the automatic snapping. After the automatic snapping is enabled, the electronic device 100 may perform an operation shown in a subsequent step, to implement automatic snapping.

S102: Obtain a current image frame (frame-b) reported by a camera.

The camera of the electronic device 100 may generate a RAW image in real time based on light within a framing range, and send the RAW image to an upper-layer application that invokes the camera, for example, a camera application. A frame rate of 30 fps is used as an example. The camera may report one frame of RAW image to the upper-layer application every 33.3 milliseconds (ms), that is, the upper-layer application may receive one frame of RAW image every 33.3 ms.

At a specific moment, the upper layer may receive one latest frame of RAW image reported by the camera, for example, an i^{th} frame of RAW image. At this moment, the i^{th} frame of RAW image is also referred to as a current image frame. Refer to FIG. 6A. After downsampling and splitting, the electronic device 100 may further obtain an i^{th} frame of Tiny image, which is denoted as frame-b. The electronic device 100 may use the small-size Tiny image for processing and analysis, to reduce computing costs and improve processing efficiency.

S103: Determine whether frame-b satisfies a candidate condition.

A selector may be preconfigured in the electronic device 100. A candidate condition is set in the selector. Refer to the output result of the perception module shown in FIG. 6A. The candidate condition includes one or more of the following: a specific object is included, a size and a position of the specific object satisfy a preset requirement, a specific action is included, a human face is included, a size and a position of the human face satisfy a preset requirement, a smile is on the human face, an eye on the human face is open, definition is greater than a preset value, exposure is within a preset interval, or the like.

The selector may determine, based on an output result of the perception module, whether frame-b satisfies the candidate condition. On the basis of satisfaction of the condition, the selector may preliminarily determine that frame-b is wonderful. In this case, the electronic device 100 may retain frame-b. Conversely, if frame-b is not wonderful, the electronic device 100 may discard frame-b and not perform a subsequent operation. The electronic device 100 may obtain a next frame of Tiny image, and then determine whether the image satisfies a candidate condition.

The selector may be disposed in the decision module shown in FIG. 6A. A result output by a detection algorithm of the perception module may be first input to the selector of the decision module. Then, the selector may determine, based on the output result of the perception module, whether frame-b satisfies the candidate condition.

Specifically, when the subject detection algorithm outputs at least one object box of frame-b, the selector may determine that frame-b includes a specific object. When a proportion of the object box in the image is within 30% to 80% and a distance between an object center point and an image center point is within 200p (pixels), the selector may determine that a size and a position of the specific object in frame-b satisfy a preset requirement. That a proportion of the object box in the image is within 30% to 80% and a distance between an object center point and an image center point is within 200p may be referred to as a first preset requirement. When the action evaluation algorithm outputs a valid action score, the selector may determine that frame-b includes a specific action. When the human face detection algorithm outputs a human face box, the selector may determine that frame-b includes a human face. When a proportion of the human face box in the image is within 10% to 60% and a distance between a human face center point and an image center point is within 300p, the selector may determine that a size and a position of the human face in frame-b satisfy a preset requirement. That a proportion of the human face box in the image is within 10% to 60% and a distance between a human face center point and an image center point is within 300p may be referred to as a second preset requirement. When curvature of lips output by the human face attribute algorithm is greater than a threshold, the selector may determine that a smile is on the human face in frame-b. When upper and lower eyelids output by the human face attribute algorithm is greater than a threshold, the selector may determine that an eye on the human face in frame-b is open. When definition output by the definition algorithm is greater than a first threshold, the selector may determine that frame-b is clear. When exposure reported by the camera is within a first interval, the selector may determine that color and brightness of frame-b are normal.

By performing S103, the electronic device 100 may perform initial screening on images reported by the camera, and filter out an image frame that apparently does not satisfy a highlight image requirement, to reduce computing costs and power consumption.

The decision module may further determine a comprehensive score, namely, a highlight degree, based on specific data reported by the perception module. Therefore, on the basis of satisfaction of the candidate condition, the decision module may further determine whether a comprehensive score of frame-b reaches a threshold. A highlight degree of frame-b may be obtained based on a result output by each detection algorithm in the perception mode shown in FIG. 6A. Details are not described herein again.

When the comprehensive score of frame-b is greater than the threshold, the electronic device 100 may determine to perform a subsequent operation. Otherwise, the electronic device 100 may discard frame-b and not perform a subsequent operation. The electronic device 100 may obtain a next frame of Tiny image, and then determine whether the image satisfies a candidate condition.

S104: Determine whether a cache area (cache) is empty.

A cache area may be disposed in the decision module and is denoted as cache, and cache may be configured to cache a candidate highlight image frame output by the selector. In addition, a timer survival-timer may be disposed in the decision module, and survival-timer may be configured to record survival time of a candidate highlight image frame in cache.

After the selector can determine that frame-b satisfies the candidate condition, the decision module may determine whether cache is empty, that is, whether cache stores a previously-output candidate highlight image frame. When cache is empty, that is, no candidate highlight image frame is stored, with reference to S107, the decision module may write frame-b to cache, and reset survival-timer, to record survival time of frame-b in cache. When cache is not empty, the decision module may obtain a similarity between a candidate highlight image frame frame-a cached in cache and the current frame frame-b and highlight degrees of frame-a and frame-b. The similarity between frame-a and frame-b may be obtained by using a similarity algorithm.

S105: Determine whether frame-a is similar to frame-b.

First, the decision module may determine, based on the similarity between frame-a and frame-b, whether frame-a is similar to frame-b. That frame-a is similar to frame-b means that the two candidate highlight image frames output by the selector are very similar. From the perspective of avoidance of redundancy, preferably, the decision module needs to perform screening on the two frames of images, and select a more wonderful image for outputting a highlight photo. If frame-a is not similar to frame-b, it means that the candidate highlight image frame frame-a currently cached in cache is an image with a highest highlight degree in all similar images of a previous scene. In this case, the decision module may trigger snapping of the image frame-a.

A similarity threshold (a first preset value) may be preset in the decision module. When the similarity between frame-a and frame-b is less than the similarity threshold, the decision module may determine that frame-a is not similar to frame-b. Otherwise, the decision module may determine that frame-a is similar to frame-b. When frame-a is similar to frame-b, the decision module may perform S106, to determine highlight degrees of frame-a and frame-b. When frame-a is not similar to frame-b, the decision module may perform S115.

S106: Determine whether the highlight degree of frame-a is lower than that of frame-b.

When the highlight degree of the candidate highlight image frame frame-a cached in cache is lower than the highlight degree of the current frame frame-b, it means that frame-b is a more wonderful image in frame-a and frame-b that are similar. Otherwise, frame-a is a more wonderful image.

Therefore, when the highlight degree of frame-a is lower than that of frame-b, the decision module may perform S107, discard frame-a, and retain frame-b, to avoid redundancy. Conversely, when the highlight degree of frame-a is higher than that of frame-b, the electronic device may perform S108, discard frame-b, and continue to retain frame-a.

S107: Write frame-b to cache, and reset survival-timer.

The decision module may write frame-b to cache to replace the candidate highlight image frame frame-a originally stored in cache, so as to discard frame-a and retain frame-b. In addition, the decision module may reset survival-timer, so that survival-timer starts to record survival time of frame-b in cache.

Then, the electronic device 100 may obtain a next Tiny image, and perform operations starting from S102 again. If an image frame frame-b' following frame-b is similar to frame-b, and a highlight degree of frame-b' is higher than that of frame-b, the decision module may write frame-b' to replace frame-b, to obtain an image with a highest highlight degree in a group of similar images.

S108: Survival time of frame-a increases.

When the highlight degree of frame-a is higher than that of frame-b, cache may continue to cache frame-a. In this case, frame-b that follows frame-a and is similar to frame-a but whose highlight degree is lower than that of frame-a may be filtered out, to avoid redundancy.

When frame-b is discarded and frame-a is retained, survival time of frame-a recorded by survival-timer continues to increase. Similarly, in S107, if the image frame frame-b' following frame-b is similar to frame-b, but the highlight degree of frame-b' is lower than that of frame-b, the decision module may continue to cache frame-b. In this case, the survival time of frame-b recorded by survival-timer continues to increase.

S109: Determine whether the survival time of frame-a is greater than a threshold thres_t2 (1s).

The threshold thres_t2 is set in the decision module. For example, thres_t2 may be 1s. When timing duration of survival-timer reaches thres_t2, it means that the candidate highlight image frame-a stored in cache is an image with a highest highlight degree in a relatively long period of time. Therefore, when the timing duration of survival-timer reaches thres_t2, the decision module may trigger snapping of the candidate highlight frame frame-a currently stored in cache. Conversely, when the timing duration of survival-timer does not reach thres_t2, the electronic device 100 may obtain a next Tiny image, and perform operations starting from S102 again, to determine whether there is a subsequent image that is similar to frame-a and whose highlight degree is higher than that of frame-a. A time interval indicated by the threshold thres_t2 may be referred to as a first time interval.

According to processing strategies shown in S105, S106, S108, and S109, a highlight image frame in an image stream can be obtained, and only a most wonderful frame in similar candidate highlight image frames can be retained, so as to avoid redundancy.

S110: Determine whether a time interval between frame-a and a previous snapped image is greater than a threshold thres_t1 (5s).

Generally, in a short period of time, images generated by the camera are highly similar. After one frame of image is snapped, if a second image is snapped immediately, the image is probably highly similar to the previous snapped image. Therefore, to further limit a quantity of snapped images and obtain highlight images of different scenes as much as possible, a timer waiting-timer and a threshold thres_t1 may be set in the decision module. After a highlight photo is snapped, waiting-timer may start timing again. When next snapping is triggered, the decision module may terminate the snapping if timing duration of waiting-timer is less than the threshold thres_t1. A time interval indicated by the threshold thres_t1 may be referred to as a second time interval.

For example, thres_t1=5s, and waiting-timer=3s. After the image frame-a with a highest highlight degree is obtained from images in latest 1s, the decision module may determine, based on timing duration of waiting-timer, that a time interval between frame-a and a previous snapped highlight photo is only 3s, which is less than 5s indicated by thres_t1. In this case, the decision module may terminate the snapping of frame-a.

The timer waiting-timer may be replaced by a parameter that records a time of previous snapping. When S110 is performed, the decision module may obtain a parameter that records a time of previous snapping. If an interval between the time of the previous snapping and a current time is less than the threshold thres_t1, the decision module may also terminate the snapping.

After the snapping is terminated, the electronic device 100 may obtain a next Tiny image, and perform operations starting from S102 again, to obtain a highlight image frame.

S111: Determine whether a quantity of snapped images in a category to which frame-a belongs is less than a threshold thres_s (15).

If a same object is shot by the camera for a relatively long time, even if automatic snapping is limited by using waiting-timer, a large quantity of repeated photos are generated. Therefore, to further limit a frequency of automatic snapping and reduce repeated highlight photos, the decision module may mark a shooting scene based on image content, and set an automatic snapping upper limit, namely, a threshold thres_s (a fourth preset value), for each shooting scene. When a quantity of obtained highlight photos of a shooting scene corresponding to a candidate highlight image frame that triggers automatic snapping reaches thres_s, the decision module may terminate the snapping.

Table 1 shows an example of automatic snapping upper limits of a plurality of scenes maintained by the electronic device 100.

**Table 1**

| Sequence number | Scene category | Automatic snapping upper limit |
|---|---|---|
| 1 | Jumping | 15 |
| 2 | Glancing back | 15 |
| 3 | Throwing a ball | 15 |
| 4 | Playing table tennis | 15 |
| 5 | Playing badminton | 15 |
| 6 | Playing baseball | 15 |
| 7 | Playing rugby | 15 |
| 8 | Playing Frisbee | 15 |
| 9 | Running | 5 |
| 10 | Splashing water | 5 |
| 11 | Cat | 5 |
| 12 | Dog | 5 |
| ... | ... | ... |

For example, thres_s1=15 (photos), and counter1=8. Herein, counter1 is a counter for counting a snapped highlight photo of an athlete jumping scene, and thres_s1 is a threshold corresponding to counter1, that is, an automatic snapping upper limit corresponding to the athlete jumping scene. After the snapping of frame-a (frame-a belongs to the athlete jumping scene) is triggered, the decision module may obtain a current counting result 8 of counter1. In this case, the decision module may determine that the snapping upper limit, that is, 15, of the shooting scene corresponding to frame-a has not been reached. In this case, the decision module may continue to snap frame-a. If a current counting result of counter1 is 15, the decision module may determine that the snapping upper limit of the shooting scene corresponding to frame-a has been reached. In this case, the decision module may terminate the snapping of frame-a. In thres_s1=15, 15 is a specific fourth preset value.

After the snapping is terminated, the electronic device 100 may obtain a next frame of Tiny image, and perform operations starting from S102 again, to obtain a highlight image frame.

A sequence of S110 and S111 is not limited in embodiments of this application. The decision module may first determine, by using waiting-timer, whether an interval between a current time and a time of previous snapping is long enough, or may first determine, by using thres_s, whether enough highlight photos of a shooting scene corresponding to a current candidate highlight image frame that triggers snapping have been output.

In some embodiments, the electronic device 100 may set a total automatic snapping upper limit, for example, 100 photos. When a quantity of snapped photos reaches 100, the electronic device 100 no longer snaps a highlight image frame. 100 described above may be referred to as a third preset value.

S112: Snap frame-a.

In a case in which both S110 and S111 are satisfied, the decision module may report a snapping event to the HAL, to indicate the HAL to perform a snapping operation and output a highlight photo. For example, the decision module may report a frame number of the candidate highlight image frame frame-a to the HAL. The cache processing module in the HAL may obtain a RAW image corresponding to frame-a from the recycling buffer, and write the RAW image to the dedicated buffer. Then, the snapping processing module may read the highlight image frame frame-a from the dedicated cache area, and finally obtain a highlight photo and a thumbnail corresponding to the highlight photo.

Refer to the descriptions of FIG. 6A. In this process, the snapping processing module may perform one or more types of image processing on the candidate highlight image frame, to further enhance an effect of a highlight photo.

Alternatively, with reference to the descriptions of FIG. 6A, after the frame number of the candidate highlight image frame frame-a is reported to the HAL, the cache processing module may obtain a group of image frames including frame-a from the recycling buffer, and write the group of image frames to the dedicated buffer. The snapping processing module synthesizes a highlight image frame frame-a' based on the group of image frames, and then outputs a highlight photo corresponding to frame-a' and a thumbnail of the highlight photo.

S113: Clear cache.

After snapping is reported, the decision module may clear a candidate highlight image frame cached in cache, for example, frame-a. In this way, a subsequent candidate highlight image frame that satisfies a candidate condition may be written to cache. The electronic device 100 may continue to determine, according to the method shown in FIG. 7A to FIG. 7C, whether to snap the candidate highlight image frame cached in cache.

S114: Update a time of previous snapping (or reset waiting-timer) and a quantity of snapped images.

After snapping is reported, the decision module may update a time of previous snapping or reset waiting-timer, to limit continuous snapping of redundant photos in a short time.

The decision module may further update a quantity of snapped images. For example, after the snapping of frame-a is reported, the decision module may update a quantity of snapped images of a scene to which frame-a belongs. The quantity of snapped images of the scene increases by 1. When the quantity increases to an automatic snapping upper limit of the scene, the decision module may stop snapping of more redundant photos of the same scene.

S115: Determine whether frame-a is similar to a snapped image.

That frame-a is not similar to frame-b means that a shooting scene may change and frame-a and frame-b are not redundant highlight image frames of a same scene. In this case, on the basis of an end of a previous shooting scene, the decision module may determine to trigger snapping of the candidate highlight image frame frame-a that is cached in cache and that is of the previous shooting scene.

To avoid redundancy, before snapping of frame-a is triggered, the decision module may further determine whether frame-a is similar to a snapped highlight photo. If frame-a is similar to the snapped highlight photo, it means that frame-a is redundant. In this case, the decision module may discard frame-a. As shown in FIG. 7A to FIG. 7C, the decision module may perform an operation shown in S107: write frame-b to cache, to replace the originally stored candidate highlight image frame frame-a, and reset survival-timer.

If frame-a is not similar to the snapped highlight photo, it means that frame-a is not redundant. In this case, the decision module may perform S116: trigger snapping of frame-a.

S116: Trigger snapping of frame-a.

Refer to the descriptions of S110 to S114. After the snapping of frame-a is triggered, the decision module may determine to obtain timing duration of waiting-timer, to determine whether a time interval between the snapping of frame-a and previous snapping is long enough, and the decision module may obtain a quantity of snapped highlight photos of a shooting scene corresponding to frame-a, to determine whether a snapping upper limit has been reached. Details are not described herein again.

When the time interval reaches a threshold, and/or the quantity of corresponding snapped images does not reach the automatic snapping upper limit, the HAL may perform a snapping operation, and output a highlight photo corresponding to frame-a.

S117: Write frame-b to cache.

After frame-a cached in cache is snapped, the decision module may write frame-b to cache. Subsequently, the electronic device 100 may compare frame-b with an image following frame-b, to determine whether to snap frame-b.

Similarly, after frame-a is snapped according to the method shown in S116 and S116, the decision module further performs the step shown in S114: update a time of previous snapping (or reset waiting-timer) and a quantity of snapped images, so as to avoid redundancy.

In the flowchart shown in FIG. 7A to FIG. 7C, frame-a may be referred to as a first image, and a photo obtained by snapping the first image may be referred to as a first photo. Herein, frame-b in the first time interval (the threshold thres_t2) following frame-a may be referred to as a second image, an image that precedes frame-a and that has been snapped according to the procedure shown in FIG. 7A to FIG. 7C may be referred to as a third image, and a corresponding generated photo may be referred to as a third photo.

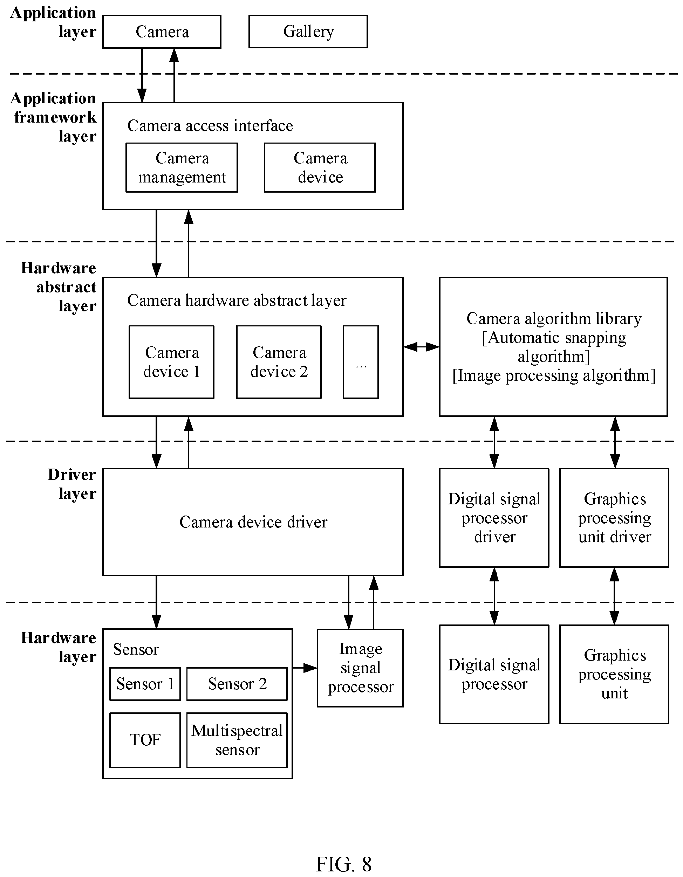

FIG. 8 is a schematic diagram of a system structure of an electronic device 100 according to an embodiment of this application.

A system of the electronic device 100 may use a layered architecture. As shown in FIG. 8, a system layer of the electronic device 100 includes an application layer, an application framework layer, a hardware abstract layer, a driver layer, and a hardware layer. The layers communicate with each other through a software interface.

The application layer may include a series of application packages. For example, the application packages may include a camera application, a gallery application, and the like.

The application framework layer provides an application programming interface (application programming interface, API) and a programming framework for applications at the application layer. The application framework layer includes some predefined functions. For example, the application framework layer may include a camera access interface. The camera access interface may include camera management and a camera device. The camera access interface is configured to provide an application programming interface and a programming framework for the camera application.

The hardware abstract layer is an interface layer located between the application framework layer and the driver layer, and provides a virtual hardware platform for an operating system. For example, the hardware abstract layer may include a camera hardware abstract layer and a camera algorithm library. The camera hardware abstract layer may provide virtual hardware for a camera device 1 (a first camera), a camera device 2 (a second camera), or more camera devices. The camera algorithm library stores a plurality of types of image processing algorithms. For example, in this embodiment of this application, the camera algorithm library may include a subject detection algorithm, an action evaluation algorithm, a human face detection algorithm, a human face attribute detection algorithm, a definition algorithm, and the like. The camera hardware abstract layer may invoke an algorithm in the camera algorithm library, to obtain corresponding image information.

The driver layer is a layer between hardware and software. The driver layer includes various hardware drivers. For example, the driver layer may include a camera device driver, a digital signal processor driver, a graphics processing unit driver, and the like. The camera device driver is configured to drive a sensor of a camera to capture an image, and drive an image signal processor to preprocess the image. The digital signal processor driver is configured to drive a digital signal processor to process an image. The graphics processing unit driver is configured to drive a graphics processing unit to process an image.

In this embodiment of this application, after a user operation of starting the camera application (a user operation performed on the camera application icon 113G shown in FIG. 1A) is detected, the camera application invokes the camera access interface at the application framework layer, to start the camera application. Then, a camera device at the camera hardware abstract layer, for example, the camera device 1, is invoked, to send an instruction for starting the camera application, and the camera hardware abstract layer sends the instruction to the camera device driver at the driver layer. The camera device driver may start a sensor corresponding to the camera device, for example, a sensor 1. Then, the sensor is used to collect an image optical signal, and the image optical signal is transmitted to the image signal processor for preprocessing, to obtain a RAW image. The original stream is transmitted to the camera hardware abstract layer through the camera device driver.

The camera hardware abstract layer may send the RAW image stream to the camera algorithm library. On the basis of support of the digital signal processor and the graphics processing unit, the camera algorithm library may downsample the RAW image stream, to obtain a low-resolution processing stream: a Tiny stream.

Then, on the basis of support of the digital signal processor and the graphics processing unit, the camera algorithm library may invoke the subject detection algorithm, the action evaluation algorithm, the human face detection algorithm, the human face attribute algorithm, the definition algorithm, and the like, to obtain information about image content and definition of an image, and further determine, based on the image content and the definition, whether the image is wonderful. After a highlight image frame is identified, the camera algorithm library may report an automatic snapping event to the HAL.

After the automatic snapping event is received, the HAL may obtain, based on a frame number carried in the event, a corresponding image frame from the received RAW image stream, and then output the image frame as a highlight photo. In this process, the HAL may further invoke the camera algorithm library to perform other image processing, for example, a saturation optimization algorithm, an exposure compensation algorithm, and a face/body beautifying algorithm, on the highlight image frame that triggers automatic snapping, so as to obtain a better image effect.

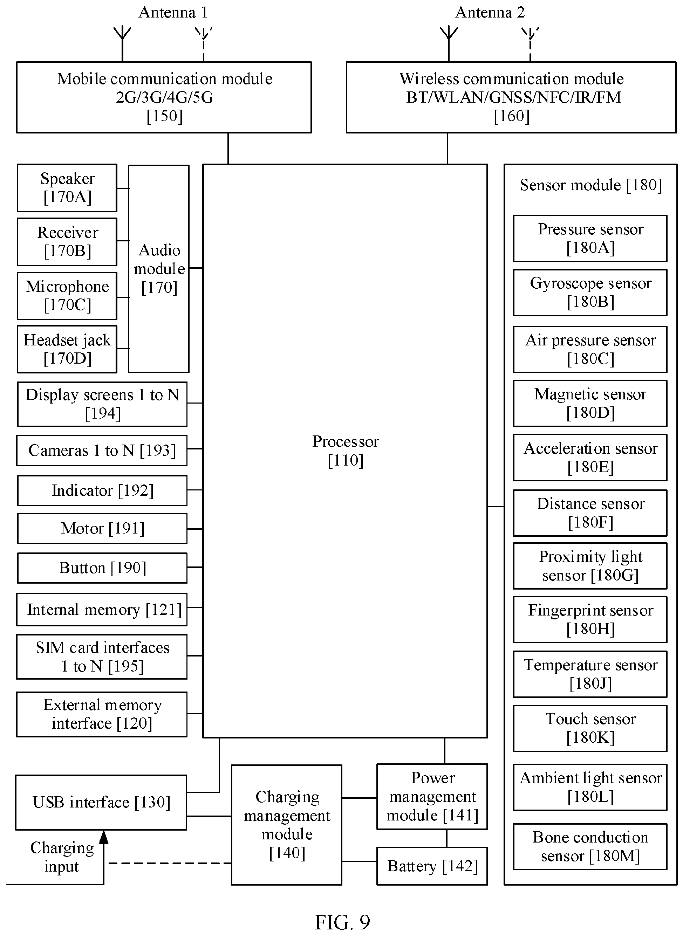

FIG. 9 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It can be understood that the structure illustrated in embodiments of the present invention does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may generate an operation control signal based on instruction operation code and a time sequence signal, to complete control of instruction fetching and instruction execution. A memory may be further disposed in the processor 110, and is configured to store an instruction and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 100. The processor 110 communicates with the display screen 194 through the DSI interface, to implement a display function of the electronic device 100.

The USB interface 130 is an interface that complies with a USB standard specification, and may be specifically a mini USB interface, a micro USB interface, a USB Type-C interface, or the like. The USB interface 130 may be configured to connect to a charger to charge the electronic device 100, or may be used for data transmission between the electronic device 100 and a peripheral device. The interface may alternatively be configured to connect to a headset, to play audio through the headset. The interface may alternatively be configured to connect to another electronic device, for example, an AR device.

It can be understood that an interface connection relationship between the modules shown in this embodiment of the present invention is merely an example for description, and does not constitute a limitation on a structure of the electronic device 100. In some other embodiments of this application, the electronic device 100 may use an interface connection manner different from that in the foregoing embodiments, or use combinations of a plurality of interface connection manners.

The charging management module 140 is configured to receive a charging input from the charger. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140 and supplies power to the processor 110, the internal memory 121, the display screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The electronic device 100 may implement a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that perform program instructions to generate or change display information.

The display screen 194 is configured to display an image, a video, or the like. The display screen 194 may include a display panel. The display screen 194 may include a display panel. A liquid crystal display (liquid crystal display, LCD) may be used as the display panel. The display panel may alternatively be manufactured by using an organic light-emitting diode (organic light-emitting diode, OLED), an active-matrix organic light-emitting diode (active-matrix organic light emitting diode, AMOLED), a flex light-emitting diode (flex light-emitting diode, FLED), a mini-LED, a micro-LED, a micro-OLED, a quantum dot light-emitting diode (quantum dot light emitting diodes, QLED), or the like. In some embodiments, the electronic device may include 1 or N display screens 194, where N is a positive integer greater than 1.

In this embodiment of this application, the electronic device 100 may display the user interfaces shown in FIG. 1A to FIG. 1F, FIG. 2A to FIG. 2H, FIG. 3A to FIG. 3J, FIG. 4A to FIG. 4E, and FIG. 5A to FIG. 5E by using a display function provided by devices such as the GPU, the display screen 194, and the application processor.

The electronic device 100 may implement a shooting function by using the ISP, the camera 193, the video codec, the GPU, the display screen 194, the application processor, and the like.

The ISP is configured to process data fed back by the camera 193. For example, during photo shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include 1 or N cameras 193, where N is a positive integer greater than 1.

The video codec is configured to compress or decompress a digital video. The electronic device 100 may support one or more types of video codecs. In this case, the electronic device 100 may play or record videos in a plurality of coding formats, such as moving picture experts group (moving picture experts group, MPEG)1, MPEG2, MPEG3, and MPEG4.

In this embodiment of this application, the electronic device 100 may obtain an image by using a shooting function provided by the ISP, the camera 193, the video codec, the GPU, the display screen 194, the application processor, and the like, to implement automatic snapping.

The internal memory 121 may include one or more random access memories (random access memory, RAM) and one or more non-volatile memories (non-volatile memory, NVM). The random access memory may be directly read and written by the processor 110, may be configured to store an executable program (for example, a machine instruction) of an operating system or another running program, and may be configured to store data of a user and an application, and the like. The non-volatile memory may also store the executable program, the data of the user and the application, and the like, which may be loaded into the random access memory in advance for the processor 110 to perform direct reading and writing.

In this embodiment of this application, computer program code corresponding to automatic snapping may be stored in the NVM. When this function is enabled, the corresponding program code may be mounted to the RAM. The processor 110 may directly read the program code in the RAM to implement automatic snapping. Image files such as a highlight photo obtained through automatic snapping and a thumbnail of the photo may be written to the NVM for saving, so that the user can read and view the image file at any time.

The external memory interface 120 may be configured to connect to an external non-volatile memory, to expand a storage capability of the electronic device 100. The external non-volatile memory communicates with the processor 110 through the external memory interface 120, to implement a data storage function. For example, the image files such as the highlight photo obtained through automatic snapping and the thumbnail of the photo are stored in the external non-volatile memory.

The electronic device 100 may implement an audio function by using the audio module 170, the speaker 170A, the receiver 170B, the microphone 170C, the headset jack 170D, the application processor, and the like. For example, after a camera application is started, the camera application may invoke the audio module 170 to obtain an ambient audio signal, which is combined with an image stream generated by a device such as the camera to form a video.

The pressure sensor 180A is configured to sense a pressure signal, and may convert the pressure signal into an electrical signal. In some embodiments, the pressure sensor 180A may be disposed on the display screen 194. When a touch operation is performed on the display screen 194, the electronic device 100 detects intensity of the touch operation based on the pressure sensor 180A. The electronic device 100 may further calculate a touch position based on a detection signal of the pressure sensor 180A.

The gyroscope sensor 180B may be configured to detect angular velocity of the electronic device 100 in various directions (usually, on three axes). The acceleration sensor 180E may detect accelerations of the electronic device 100 in various directions. The gyroscope sensor 180B and the acceleration sensor 180E may be configured to determine a motion posture of the electronic device 100.

The air pressure sensor 180C is configured to measure an air pressure. The magnetic sensor 180D includes a Hall effect sensor. The electronic device 100 may detect opening and closing of a flip cover by using the magnetic sensor 180D. The distance sensor 180F is configured to measure a distance. In a shooting scene, the electronic device 100 may measure a distance by using the distance sensor 180F, to implement quick focusing. The proximity light sensor 180G may be configured to determine whether there is an object near the electronic device 100. When insufficient reflected light is detected, the electronic device 100 may determine that there is no object near the electronic device 100. The ambient light sensor 180L is configured to perceive ambient light brightness. The electronic device 100 may adaptively adjust brightness of the display screen 194 based on the perceived ambient light brightness. In a shooting scene, the ambient light sensor 180L may be further configured to automatically adjust white balance during photo shooting. The fingerprint sensor 180H is configured to collect a fingerprint. The temperature sensor 180J is configured to detect a temperature. The bone conduction sensor 180M may obtain a vibration signal.

The touch sensor 180K is also referred to as a "touch device". The touch sensor 180K may be disposed on the display screen 194, and the touch sensor 180K and the display screen 194 form a touchscreen, which is also referred to as a "touch screen". The touch sensor 180K is configured to detect a touch operation on or near the touch sensor 180K. The touch sensor may transfer the detected touch operation to the application processor to determine a type of the touch event. A visual output related to the touch operation may be provided by using the display screen 194. In some other embodiments, the touch sensor 180K may alternatively be disposed on a surface of the electronic device 100, at a position different from that of the display screen 194.

In this embodiment of this application, the electronic device 100 may identify, by using a touch detection function provided by the touch sensor 180K, whether there is a touch operation performed on the screen, a position of the operation on the screen, and a type of the operation, to implement user interface switching and display the user interfaces shown in FIG. 1A to FIG. 1F, FIG. 2A to FIG. 2H, FIG. 3A to FIG. 3J, FIG. 4A to FIG. 4E, and FIG. 5A to FIG. 5E, so that the user obtains an automatic snapping service.

The button 190 includes a power on/off button, a volume button, and the like. The electronic device 100 may receive a button input and generate a button signal input related to a user setting and function control of the electronic device 100. The motor 191 may generate a vibration prompt. The indicator 192 may be an indicator light. The SIM card interface 195 is configured to connect to a SIM card.

The term "user interface (user interface, UI)" in this specification, claims, and accompanying drawings of this application is a medium interface for interaction and information exchange between an application or an operating system and a user. The user interface implements conversion between an internal form of information and a form acceptable to the user. A user interface of an application is source code written in a specific computer language such as Java or extensible markup language (extensible markup language, XML). The interface source code is parsed and rendered on a terminal device, and finally presented as content that can be recognized by a user, for example, a control such as a picture, a text, or a button. A control (control), also referred to as a widget (widget), is a basic element of a user interface. Typical controls include a toolbar (toolbar), a menu bar (menu bar), a text box (text box), a button (button), a scrollbar (scrollbar), a picture, and a text. Attributes and content of controls in an interface are defined by tags or nodes. For example, in XML, controls included in an interface are defined by nodes such as <Textview>, <ImgView>, and <VideoView>. A node corresponds to a control or an attribute in an interface. The node is presented as content visible to a user after being parsed and rendered. In addition, interfaces of many applications, for example, a hybrid application (hybrid application), generally include a web page. A web page, also referred to as a page, may be understood as a special control embedded in an application interface. The web page is source code written in a specific computer language, such as hypertext markup language (hyper text markup language, HTML), cascading style sheets (cascading style sheets, CSS), or JavaScript (JavaScript, JS). The web page source code may be loaded and displayed by a browser or a web page display component with similar functions to the browser as content that can be recognized by a user. Specific content included in the web page is also defined by tags or nodes in the web page source code. For example, in HTML, elements and attributes of the web page are defined by <p>, <img>, <video>, and <canvas>.

A common representation form of the user interface is a graphical user interface (graphic user interface, GUI), which is a graphically displayed user interface related to a computer operation. The graphical user interface may be an interface element such as an icon, a window, or a control that is displayed on a display screen of an electronic device. The control may include visible interface elements such as an icon, a button, a menu, a tab, a text box, a dialog box, a status bar, a navigation bar, and a widget.

As used in the specification and the claims of this application, the singular expressions "one", "a", "an", and "this" are also intended to include plural expressions, unless otherwise specified in the context clearly. It should be further understood that the term "and/or" used in this application indicates and includes any or all possible combinations of one or more listed items. As used in the foregoing embodiments, based on the context, the term "when" may be interpreted as a meaning of "if", "after", "in response to determining", or "in response to detecting". Similarly, based on the context, the phrase "when it is determined" or "if it (the described condition or event) is detected" may be interpreted as a meaning of "if it is determined", "in response to determining", "when it (the described condition or event) is detected", or "in response to detecting (the described condition or event)".

All or some of the foregoing embodiments may be implemented by software, hardware, firmware, or any combination thereof. When software is used to implement embodiments, all or some of the embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the method in the foregoing embodiments may be implemented by a computer program instructing related hardware. The program may be stored in a computer-readable storage medium. When the program is executed, procedures of the foregoing method embodiments may be included. The storage medium includes any medium that can store program code, such as a ROM, a random access memory RAM, a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A shooting method, applied to an electronic device, wherein the electronic device comprises a camera, and the method comprises:
starting a camera application;
displaying a preview interface at a moment T1, wherein the preview interface comprises a preview area, a shutter button, and a third control, and the preview area displays an image frame captured by the camera in real time;
keeping displaying the preview interface, and displaying a thumbnail of a first image in the third control at a moment T2, wherein
the first image is an image that is automatically shot by the electronic device between the moment T1 and the moment T2, in which an object is in a first posture, and whose image quality satisfies a first preset condition, the image quality comprises definition and exposure of the image, the first posture is a posture in a first action, the first action is determined based on a plurality of image frames captured by the electronic device in real time, and the first action is a preset action; and
the moment T1 precedes the moment T2; and
detecting a first operation performed on the third control; and displaying the first image in response to the first operation.

2. The method according to claim 1, wherein the first image further satisfies one or more of the following:
a first object is comprised, a size and a position of the first object satisfy a first preset requirement, a human face is comprised, a size and a position of the human face satisfy a second preset requirement, an eye on the human face is open, or a smile is on the human face.

3. The method according to claim 1 or 2, wherein the method further comprises:
further displaying a first identifier in the preview interface at the moment T2, wherein the first identifier is used to indicate that the electronic device has automatically shot the first image.

4. The method according to any one of claims 1 to 3, wherein the method further comprises:
displaying a third interface, wherein the third interface displays one or more images stored in the electronic device, the one or more images comprise a thumbnail of the first image, the thumbnail displays a first identifier, and the first identifier is used to indicate that the first image is automatically shot by the electronic device.

5. The method according to any one of claims 1 to 4, wherein the preview interface further comprises a first control, and the method further comprises:
detecting a user operation performed on the first control, and displaying a fourth interface, wherein the fourth interface comprises a second control; and
detecting a user operation performed on the second control, and enabling an automatic shooting function.

6. The method according to any one of claims 1 to 5, wherein an image captured by the camera after the first image further comprises a second image, the second image also comprises the first action and image quality of the second image also satisfies the first preset condition, a highlight degree of the second image is lower than a highlight degree of the first image, and an image shot by the electronic device does not comprise the second image; and a highlight degree of an image is determined based on a completion degree of the first action in the image and image quality of the image.

7. The method according to claim 6, wherein a time interval between the second image and the first image is less than a first time interval.

8. The method according to any one of claims 1 to 5, wherein an image captured by the camera before the first image further comprises a third image, the third image also comprises the first action and image quality of the second image also satisfies the first preset condition, and the method further comprises: automatically shooting the third image; and
a similarity between the first image and the third image is less than a first preset value, or a time interval between the first image and the third image is greater than a second time interval.

9. The method according to any one of claims 1 to 8, wherein before the electronic device automatically shoots the first image that comprises the first action and whose image quality satisfies the first preset condition, the method further comprises: determining that a quantity of images that have been automatically shot by the electronic device is less than a third preset value.

10. The method according to claim 9, wherein the determining that a quantity of images that have been automatically shot by the electronic device is less than a third preset value specifically comprises: determining that a quantity of images that belong to a same scene as the first image in the images that have been automatically shot by the electronic device is less than a fourth preset value.

11. The method according to any one of claims 1 to 10, wherein that the first image is an image that is automatically shot by the electronic device between the moment T1 and the moment T2 and comprises a first action and whose image quality satisfies a first preset condition specifically comprises: the first image is obtained by the electronic device by automatically shooting a plurality of frames of images comprising a fourth image, wherein the fourth image is an image between the moment T1 and the moment T2 that comprises the first action and whose image quality satisfies the first preset condition.

12. The method according to claim 11, wherein that the first image is obtained by the electronic device by automatically shooting a plurality of frames of images comprising a fourth image specifically comprises: in a first shooting mode, the first image is obtained by the electronic device by automatically shooting the plurality of frames of images comprising the fourth image.

13. The method according to claim 12, wherein the first shooting mode comprises a night mode.

14. An electronic device, comprising one or more processors and one or more memories, wherein the one or more memories are coupled to the one or more processors, the one or more memories are configured to store computer program code, the computer program code comprises a computer instruction, and when the one or more processors execute the computer instruction, the method according to any one of claims 1 to 13 is performed.

15. A computer-readable storage medium, comprising an instruction, wherein when the instruction is run on an electronic device, the method according to any one of claims 1 to 13 is performed.
